# EUROPEAN PATENT APPLICATION

(11) **EP 4 492 855 A1**
(43) Date of publication of application: **15.01.2025**
(21) Application number: 23767195.3
(22) Date of filing: 10.03.2023
(51) Int. Cl.: H04W 24/04, H04L 41/14, G06N 20/00, G06N 3/08

(54) **COMMUNICATION RELATED TO ANALYSIS INFORMATION**

(30) Priority: 10.03.2022 KR 20220029884; 29.04.2022 US 202263336307 P
(71) Applicant: LG Electronics Inc., Yeongdeungpo-gu Seoul 07336 (KR)
(72) Inventor: KIM, Laeyoung, Seoul 06772 (KR); KIM, Hyunsook, Seoul 06772 (KR); YOUN, Myungjune, Seoul 06772 (KR)
(74) Representative: Mooser, Sebastian Thomas
(86) International application number: PCT/KR2023/003285
(87) International publication number: WO 2023/172094

(57) **Abstract**

A disclosure of the present specification (disclosure) provides a method for performing communication related to analysis information by an SMF. The method may comprise the steps of: receiving a first PDU session establishment request message from a first UE; transmitting, to an NWDAF, a first subscription request message related to analysis information based on a first analysis ID; receiving a second PDU session establishment request message from a second UE; and determining whether to transmit, to the NWDAF, a second subscription request message related to analysis information based on a second analysis ID.

## Description

### TECHNICAL FIELD

The present specification relates to a mobile communication.

### BACKGROUND ART

3rd Generation Partnership Project (3GPP) Long-Term Evolution (LTE) is a technology for enabling high-speed packet communications. Many schemes have been proposed for the LTE objective including those that aim to reduce user and provider costs, improve service quality, and expand and improve coverage and system capacity. The 3GPP LTE requires reduced cost per bit, increased service availability, flexible use of a frequency band, a simple structure, an open interface, and adequate power consumption of a terminal as an upper-level requirement.

Work has started in International Telecommunication Union (ITU) and 3GPP to develop requirements and specifications for New Radio (NR) systems. 3GPP has to identify and develop the technology components needed for successfully standardizing the new RAT timely satisfying both the urgent market needs, and the more long-term requirements set forth by the ITU Radio communication sector (ITU-R) International Mobile Telecommunications (IMT)-2020 process. Further, the NR should be able to use any spectrum band ranging at least up to 100 GHz that may be made available for wireless communications even in a more distant future.

The NR targets a single technical framework addressing all usage scenarios, requirements and deployment scenarios including enhanced Mobile BroadBand (eMBB), massive Machine Type Communications (mMTC), Ultra-Reliable and Low Latency Communications (URLLC), etc. The NR shall be inherently forward compatible.

Artificial Intelligence (AI)/Machine Learning (ML) services may be supported in the 5G System (5GS). In the prior arts, it has not been discussed how to support the exposure of 5G Core (5GC) information to UEs given the nature of AI/ML services.

### DISCLOSURE

### TECHNICAL SOLUTION

In one aspect, a method is provided for an SMF to perform communications related to analytics information. The method may include: receiving a first PDU session establishment request message from a first UE; transmitting a first subscription request message associated with analytics information based on the first analytics ID to an NWDAF; receiving a second PDU session establishment request message from a second UE; and determining whether to transmit a second subscription request message associated with analytics information based on the second analytics ID to the NWDAF.

In another aspect, an apparatus implementing the above method is provided.

In one aspect, a method is provided for a UE to perform communications related to analytics information. The method may include: determining whether there is a need to obtain analytics information from a 5GC; sending a PDU session establishment request message to an SMF; receiving a PDU session establishment acceptance message from the SMF; and receiving analytics information based on the analytics ID from the SMF.

In another aspect, an apparatus implementing the above method is provided.

### BRIEF DESCRIPTION OF THE DRAWINGS

FIG. 1 shows an example of a communication system to which implementations of the present disclosure is applied.
FIG. 2 shows an example of wireless devices to which implementations of the present disclosure is applied.
FIG. 3 shows an example of UE to which implementations of the present disclosure is applied.
FIG. 4 shows an example of 5G system architecture to which implementations of the present disclosure is applied.
FIGS. 5 and 6 show an example of a PDU session establishment procedure to which implementations of the present disclosure is applied.
FIG. 7 illustrates an example of a split AI/ML, according to one embodiment of the present disclosure.
FIG. 8 illustrates an example of an AI/ML model deployment, according to one embodiment of the present disclosure.
FIG. 9 illustrates an example of an AI/ML model deployment, according to one embodiment of the present disclosure.
FIGS. 10a and 10b illustrate a first example of a signal flow diagram according to the first example of the present disclosure.
FIGS. 11a and 11b illustrate a second example of a signal flow diagram according to the first example of the present disclosure.
FIGS. 12a and 12b illustrate a third example of a signal flow diagram according to the first example of the present disclosure.
FIG. 13 illustrates a fourth example of a signal flow diagram according to the first example of the present disclosure.
FIG. 14 illustrates a fifth example of a signal flow diagram according to the first example of the present disclosure.
FIG. 15 illustrates a signal flow diagram according to a sixth example of the present disclosure.

### MODE FOR INVENTION

The following techniques, apparatuses, and systems may be applied to a variety of wireless multiple access systems. Examples of the multiple access systems include a Code Division Multiple Access (CDMA) system, a Frequency Division Multiple Access (FDMA) system, a Time Division Multiple Access (TDMA) system, an Orthogonal Frequency Division Multiple Access (OFDMA) system, a Single Carrier Frequency Division Multiple Access (SC-FDMA) system, and a Multi Carrier Frequency Division Multiple Access (MC-FDMA) system. CDMA may be embodied through radio technology such as Universal Terrestrial Radio Access (UTRA) or CDMA2000. TDMA may be embodied through radio technology such as Global System for Mobile communications (GSM), General Packet Radio Service (GPRS), or Enhanced Data rates for GSM Evolution (EDGE). OFDMA may be embodied through radio technology such as Institute of Electrical and Electronics Engineers (IEEE) 802.11 (Wi-Fi), IEEE 802.16 (WiMAX), IEEE 802.20, or Evolved UTRA (E-UTRA). UTRA is a part of a Universal Mobile Telecommunications System (UMTS). 3rd Generation Partnership Project (3GPP) Long-Term Evolution (LTE) is a part of Evolved UMTS (E-UMTS) using E-UTRA. 3GPP LTE employs OFDMA in downlink (DL) and SC-FDMA in uplink (UL). Evolution of 3GPP LTE includes LTE-Advanced (LTE-A), LTE-A Pro, and/or 5G New Radio (NR).

For convenience of description, implementations of the present disclosure are mainly described in regards to a 3GPP based wireless communication system. However, the technical features of the present disclosure are not limited thereto. For example, although the following detailed description is given based on a mobile communication system corresponding to a 3GPP based wireless communication system, aspects of the present disclosure that are not limited to 3GPP based wireless communication system are applicable to other mobile communication systems.

For terms and technologies which are not specifically described among the terms of and technologies employed in the present disclosure, the wireless communication standard documents published before the present disclosure may be referenced.

In the present disclosure, "A or B" may mean "only A", "only B", or "both A and B". In other words, "A or B" in the present disclosure may be interpreted as "A and/or B". For example, "A, B or C" in the present disclosure may mean "only A", "only B", "only C", or "any combination of A, B and C".

In the present disclosure, slash (/) or comma (,) may mean "and/or". For example, "A/B" may mean "A and/or B". Accordingly, "A/B" may mean "only A", "only B", or "both A and B". For example, "A, B, C" may mean "A, B or C".

In the present disclosure, "at least one of A and B" may mean "only A", "only B" or "both A and B". In addition, the expression "at least one of A or B" or "at least one of A and/or B" in the present disclosure may be interpreted as same as "at least one of A and B".

In addition, in the present disclosure, "at least one of A, B and C" may mean "only A", "only B", "only C", or "any combination of A, B and C". In addition, "at least one of A, B or C" or "at least one of A, B and/or C" may mean "at least one of A, B and C".

Also, parentheses used in the present disclosure may mean "for example". In detail, when it is shown as "control information (PDCCH)", "PDCCH" may be proposed as an example of "control information". In other words, "control information" in the present disclosure is not limited to "PDCCH", and "PDCCH" may be proposed as an example of "control information". In addition, even when shown as "control information (i.e., PDCCH)", "PDCCH" may be proposed as an example of "control information".

Technical features that are separately described in one drawing in the present disclosure may be implemented separately or simultaneously.

Although not limited thereto, various descriptions, functions, procedures, suggestions, methods and/or operational flowcharts of the present disclosure disclosed herein can be applied to various fields requiring wireless communication and/or connection (e.g., 5G) between devices.

Hereinafter, the present disclosure will be described in more detail with reference to drawings. The same reference numerals in the following drawings and/or descriptions may refer to the same and/or corresponding hardware blocks, software blocks, and/or functional blocks unless otherwise indicated.

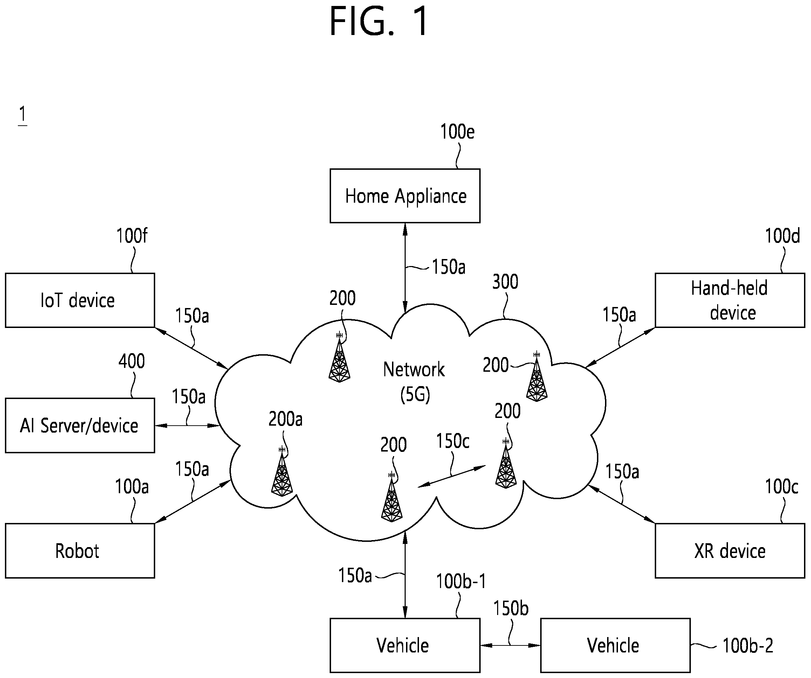

FIG. 1 shows an example of a communication system to which implementations of the present disclosure is applied.

The 5G usage scenarios shown in FIG. 1 are only exemplary, and the technical features of the present disclosure can be applied to other 5G usage scenarios which are not shown in FIG. 1.

Three main requirement categories for 5G include (1) a category of enhanced Mobile BroadBand (eMBB), (2) a category of massive Machine Type Communication (mMTC), and (3) a category of Ultra-Reliable and Low Latency Communications (URLLC).

Referring to FIG. 1, the communication system 1 includes wireless devices 100a to 100f, Base Stations (BSs) 200, and a network 300. Although FIG. 1 illustrates a 5G network as an example of the network of the communication system 1, the implementations of the present disclosure are not limited to the 5G system, and can be applied to the future communication system beyond the 5G system.

The BSs 200 and the network 300 may be implemented as wireless devices and a specific wireless device may operate as a BS/network node with respect to other wireless devices.

The wireless devices 100a to 100f represent devices performing communication using Radio Access Technology (RAT) (e.g., 5G NR or LTE) and may be referred to as communication/radio/5G devices. The wireless devices 100a to 100f may include, without being limited to, a robot 100a, vehicles 100b-1 and 100b-2, an extended Reality (XR) device 100c, a hand-held device 100d, a home appliance 100e, an Internet-of-Things (IoT) device 100f, and an Artificial Intelligence (AI) device/server 400. For example, the vehicles may include a vehicle having a wireless communication function, an autonomous driving vehicle, and a vehicle capable of performing communication between vehicles. The vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter.

In the present disclosure, the wireless devices 100a to 100f may be called User Equipments (UEs). A UE may include, for example, a cellular phone, a smartphone, a laptop computer, a digital broadcast terminal, a Personal Digital Assistant (PDA), a Portable Multimedia Player (PMP), a navigation system, a slate Personal Computer (PC), a tablet PC, an ultrabook, a vehicle, a vehicle having an autonomous traveling function, a connected car, an UAV, an AI module, a robot, an AR device, a VR device, an MR device, a hologram device, a public safety device, an MTC device, an IoT device, a medical device, a FinTech device (or a financial device), a security device, a weather/environment device, a device related to a 5G service, or a device related to a fourth industrial revolution field.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, a 5G (e.g., NR) network, and a beyond-5G network. Although the wireless devices 100a to 100f may communicate with each other through the BSs 200/network 300, the wireless devices 100a to 100f may perform direct communication (e.g., sidelink communication) with each other without passing through the BSs 200/network 300. For example, the vehicles 100b-1 and 100b-2 may perform direct communication (e.g., Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b and 150c may be established between the wireless devices 100a to 100f and/or between wireless device 100a to 100f and BS 200 and/or between BSs 200. Herein, the wireless communication/connections may be established through various RATs (e.g., 5G NR) such as uplink/downlink communication 150a, sidelink communication (or Device-to-Device (D2D) communication) 150b, inter-base station communication 150c (e.g., relay, Integrated Access and Backhaul (IAB)), etc. The wireless devices 100a to 100f and the BSs 200/the wireless devices 100a to 100f may transmit/receive radio signals to/from each other through the wireless communication/connections 150a, 150b and 150c. For example, the wireless communication/connections 150a, 150b and 150c may transmit/receive signals through various physical channels. To this end, at least a part of various configuration information configuring processes, various signal processing processes (e.g., channel encoding/decoding, modulation/demodulation, and resource mapping/de-mapping), and resource allocating processes, for transmitting/receiving radio signals, may be performed based on the various proposals of the present disclosure.

NR supports multiples numerologies (and/or multiple Sub-Carrier Spacings (SCS)) to support various 5G services. For example, if SCS is 15 kHz, wide area can be supported in traditional cellular bands, and if SCS is 30 kHz/60 kHz, dense-urban, lower latency, and wider carrier bandwidth can be supported. If SCS is 60 kHz or higher, bandwidths greater than 24.25 GHz can be supported to overcome phase noise.

The NR frequency band may be defined as two types of frequency range, i.e., Frequency Range 1 (FR1) and Frequency Range 2 (FR2). The numerical value of the frequency range may be changed. For example, the frequency ranges of the two types (FR1 and FR2) may be as shown in Table 1 below. For ease of explanation, in the frequency ranges used in the NR system, FR1 may mean "sub 6 GHz range", FR2 may mean "above 6 GHz range," and may be referred to as millimeter Wave (mmW).

**[Table 1]**

| Frequency Range designation | Corresponding frequency range | Subcarrier Spacing |
|---|---|---|
| FR1 | 450MHz - 6000MHz | 15, 30, 60kHz |
| FR2 | 24250MHz - 52600MHz | 60, 120, 240kHz |

As mentioned above, the numerical value of the frequency range of the NR system may be changed. For example, FR1 may include a frequency band of 410MHz to 7125MHz as shown in Table 2 below. That is, FR1 may include a frequency band of 6GHz (or 5850, 5900, 5925 MHz, etc.) or more. For example, a frequency band of 6 GHz (or 5850, 5900, 5925 MHz, etc.) or more included in FR1 may include an unlicensed band. Unlicensed bands may be used for a variety of purposes, for example for communication for vehicles (e.g., autonomous driving).

**[Table 2]**

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Here, the radio communication technologies implemented in the wireless devices in the present disclosure may include NarrowBand IoT (NB-IoT) technology for low-power communication as well as LTE, NR and 6G. For example, NB-IoT technology may be an example of Low Power Wide Area Network (LPWAN) technology, may be implemented in specifications such as LTE Cat NB1 and/or LTE Cat NB2, and may not be limited to the above-mentioned names. Additionally and/or alternatively, the radio communication technologies implemented in the wireless devices in the present disclosure may communicate based on LTE-M technology. For example, LTE-M technology may be an example of LPWAN technology and be called by various names such as enhanced MTC (eMTC). For example, LTE-M technology may be implemented in at least one of the various specifications, such as 1) LTE Cat 0, 2) LTE Cat M1, 3) LTE Cat M2, 4) LTE non-bandwidth limited (non-BL), 5) LTE-MTC, 6) LTE Machine Type Communication, and/or 7) LTE M, and may not be limited to the above-mentioned names. Additionally and/or alternatively, the radio communication technologies implemented in the wireless devices in the present disclosure may include at least one of ZigBee, Bluetooth, and/or LPWAN which take into account low-power communication, and may not be limited to the above-mentioned names. For example, ZigBee technology may generate Personal Area Networks (PANs) associated with small/low-power digital communication based on various specifications such as IEEE 802.15.4 and may be called various names.

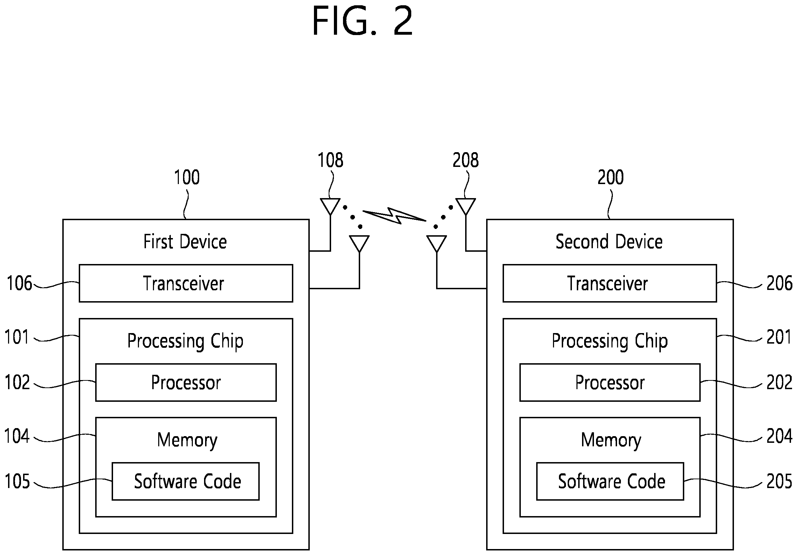

FIG. 2 shows an example of wireless devices to which implementations of the present disclosure is applied.

In FIG. 2, The first wireless device 100 and/or the second wireless device 200 may be implemented in various forms according to use cases/services. For example, {the first wireless device 100 and the second wireless device 200} may correspond to at least one of {the wireless device 100a to 100f and the BS 200}, {the wireless device 100a to 100f and the wireless device 100a to 100f} and/or {the BS 200 and the BS 200} of FIG. 1. The first wireless device 100 and/or the second wireless device 200 may be configured by various elements, devices/parts, and/or modules.

The first wireless device 100 may include at least one transceiver, such as a transceiver 106, at least one processing chip, such as a processing chip 101, and/or one or more antennas 108.

The processing chip 101 may include at least one processor, such a processor 102, and at least one memory, such as a memory 104. Additional and/or alternatively, the memory 104 may be placed outside of the processing chip 101.

The processor 102 may control the memory 104 and/or the transceiver 106 and may be adapted to implement the descriptions, functions, procedures, suggestions, methods and/or operational flowcharts described in the present disclosure. For example, the processor 102 may process information within the memory 104 to generate first information/signals and then transmit radio signals including the first information/signals through the transceiver 106. The processor 102 may receive radio signals including second information/signals through the transceiver 106 and then store information obtained by processing the second information/signals in the memory 104.

The memory 104 may be operably connectable to the processor 102. The memory 104 may store various types of information and/or instructions. The memory 104 may store a firmware and/or a software code 105 which implements codes, commands, and/or a set of commands that, when executed by the processor 102, perform the descriptions, functions, procedures, suggestions, methods and/or operational flowcharts disclosed in the present disclosure. For example, the firmware and/or the software code 105 may implement instructions that, when executed by the processor 102, perform the descriptions, functions, procedures, suggestions, methods and/or operational flowcharts disclosed in the present disclosure. For example, the firmware and/or the software code 105 may control the processor 102 to perform one or more protocols. For example, the firmware and/or the software code 105 may control the processor 102 to perform one or more layers of the radio interface protocol.

Herein, the processor 102 and the memory 104 may be a part of a communication modem/circuit/chip designed to implement RAT (e.g., LTE or NR). The transceiver 106 may be connected to the processor 102 and transmit and/or receive radio signals through one or more antennas 108. Each of the transceiver 106 may include a transmitter and/or a receiver. The transceiver 106 may be interchangeably used with Radio Frequency (RF) unit(s). In the present disclosure, the first wireless device 100 may represent a communication modem/circuit/chip.

The second wireless device 200 may include at least one transceiver, such as a transceiver 206, at least one processing chip, such as a processing chip 201, and/or one or more antennas 208.

The processing chip 201 may include at least one processor, such a processor 202, and at least one memory, such as a memory 204. Additional and/or alternatively, the memory 204 may be placed outside of the processing chip 201.

The processor 202 may control the memory 204 and/or the transceiver 206 and may be adapted to implement the descriptions, functions, procedures, suggestions, methods and/or operational flowcharts described in the present disclosure. For example, the processor 202 may process information within the memory 204 to generate third information/signals and then transmit radio signals including the third information/signals through the transceiver 206. The processor 202 may receive radio signals including fourth information/signals through the transceiver 106 and then store information obtained by processing the fourth information/signals in the memory 204.

The memory 204 may be operably connectable to the processor 202. The memory 204 may store various types of information and/or instructions. The memory 204 may store a firmware and/or a software code 205 which implements codes, commands, and/or a set of commands that, when executed by the processor 202, perform the descriptions, functions, procedures, suggestions, methods and/or operational flowcharts disclosed in the present disclosure. For example, the firmware and/or the software code 205 may implement instructions that, when executed by the processor 202, perform the descriptions, functions, procedures, suggestions, methods and/or operational flowcharts disclosed in the present disclosure. For example, the firmware and/or the software code 205 may control the processor 202 to perform one or more protocols. For example, the firmware and/or the software code 205 may control the processor 202 to perform one or more layers of the radio interface protocol.

Herein, the processor 202 and the memory 204 may be a part of a communication modem/circuit/chip designed to implement RAT (e.g., LTE or NR). The transceiver 206 may be connected to the processor 202 and transmit and/or receive radio signals through one or more antennas 208. Each of the transceiver 206 may include a transmitter and/or a receiver. The transceiver 206 may be interchangeably used with RF unit. In the present disclosure, the second wireless device 200 may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as Physical (PHY) layer, Media Access Control (MAC) layer, Radio Link Control (RLC) layer, Packet Data Convergence Protocol (PDCP) layer, Radio Resource Control (RRC) layer, and Service Data Adaptation Protocol (SDAP) layer). The one or more processors 102 and 202 may generate one or more Protocol Data Units (PDUs), one or more Service Data Unit (SDUs), messages, control information, data, or information according to the descriptions, functions, procedures, suggestions, methods and/or operational flowcharts disclosed in the present disclosure. The one or more processors 102 and 202 may generate signals (e.g., baseband signals) including PDUs, SDUs, messages, control information, data, or information according to the descriptions, functions, procedures, suggestions, methods and/or operational flowcharts disclosed in the present disclosure and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, suggestions, methods and/or operational flowcharts disclosed in the present disclosure.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. For example, the one or more processors 102 and 202 may be configured by a set of a communication control processor, an Application Processor (AP), an Electronic Control Unit (ECU), a Central Processing Unit (CPU), a Graphic Processing Unit (GPU), and a memory control processor. The one or more memories 104 and 204 may be connected to the one or more processors 102 and 202 and store various types of data, signals, messages, information, programs, code, instructions, and/or commands. The one or more memories 104 and 204 may be configured by Random Access Memory (RAM), Dynamic RAM (DRAM), Read-Only Memory (ROM), electrically Erasable Programmable Read-Only Memory (EPROM), flash memory, volatile memory, non-volatile memory, hard drive, register, cash memory, computer-readable storage medium, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the descriptions, functions, procedures, suggestions, methods and/or operational flowcharts disclosed in the present disclosure, to one or more other devices. The one or more transceivers 106 and 206 may receive user data, control information, and/or radio signals/channels, mentioned in the descriptions, functions, procedures, suggestions, methods and/or operational flowcharts disclosed in the present disclosure, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices.

The one or more transceivers 106 and 206 may be connected to the one or more antennas 108 and 208. Additionally and/or alternatively, the one or more transceivers 106 and 206 may include one or more antennas 108 and 208. The one or more transceivers 106 and 206 may be adapted to transmit and receive user data, control information, and/or radio signals/channels, mentioned in the descriptions, functions, procedures, suggestions, methods and/or operational flowcharts disclosed in the present disclosure, through the one or more antennas 108 and 208. In the present disclosure, the one or more antennas 108 and 208 may be a plurality of physical antennas or a plurality of logical antennas (e.g., antenna ports).

The one or more transceivers 106 and 206 may convert received user data, control information, radio signals/channels, etc., from RF band signals into baseband signals in order to process received user data, control information, radio signals/channels, etc., using the one or more processors 102 and 202. The one or more transceivers 106 and 206 may convert the user data, control information, radio signals/channels, etc., processed using the one or more processors 102 and 202 from the base band signals into the RF band signals. To this end, the one or more transceivers 106 and 206 may include (analog) oscillators and/or filters. For example, the one or more transceivers 106 and 206 can up-convert OFDM baseband signals to OFDM signals by their (analog) oscillators and/or filters under the control of the one or more processors 102 and 202 and transmit the up-converted OFDM signals at the carrier frequency. The one or more transceivers 106 and 206 may receive OFDM signals at a carrier frequency and down-convert the OFDM signals into OFDM baseband signals by their (analog) oscillators and/or filters under the control of the one or more processors 102 and 202.

Although not shown in FIG. 2, the wireless devices 100 and 200 may further include additional components. The additional components 140 may be variously configured according to types of the wireless devices 100 and 200. For example, the additional components 140 may include at least one of a power unit/battery, an Input/Output (I/O) device (e.g., audio I/O port, video I/O port), a driving device, and a computing device. The additional components 140 may be coupled to the one or more processors 102 and 202 via various technologies, such as a wired or wireless connection.

In the implementations of the present disclosure, a UE may operate as a transmitting device in Uplink (UL) and as a receiving device in Downlink (DL). In the implementations of the present disclosure, a BS may operate as a receiving device in UL and as a transmitting device in DL. Hereinafter, for convenience of description, it is mainly assumed that the first wireless device 100 acts as the UE, and the second wireless device 200 acts as the BS. For example, the processor(s) 102 connected to, mounted on or launched in the first wireless device 100 may be adapted to perform the UE behavior according to an implementation of the present disclosure or control the transceiver(s) 106 to perform the UE behavior according to an implementation of the present disclosure. The processor(s) 202 connected to, mounted on or launched in the second wireless device 200 may be adapted to perform the BS behavior according to an implementation of the present disclosure or control the transceiver(s) 206 to perform the BS behavior according to an implementation of the present disclosure.

In the present disclosure, a BS is also referred to as a node B (NB), an eNode B (eNB), or a gNB.

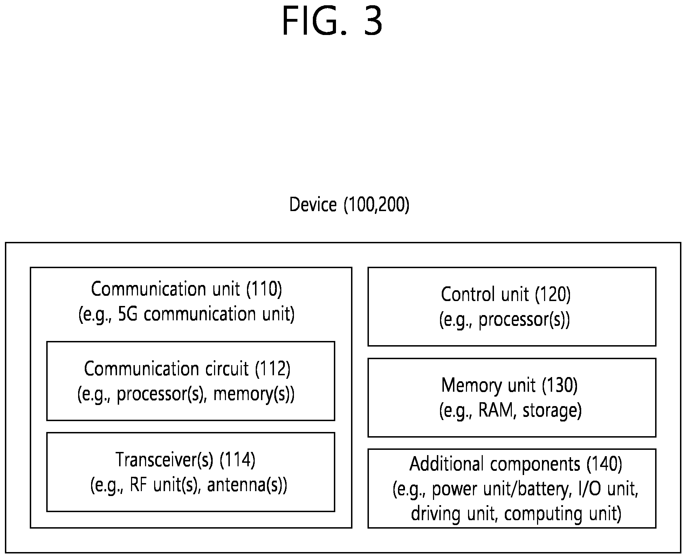

FIG. 3 shows an example of UE to which implementations of the present disclosure is applied.

Referring to FIG. 3, a UE 100 may correspond to the first wireless device 100 of FIG. 2.

A UE 100 includes a processor 102, a memory 104, a transceiver 106, one or more antennas 108, a power management module 141, a battery 142, a display 143, a keypad 144, a Subscriber Identification Module (SIM) card 145, a speaker 146, and a microphone 147.

The processor 102 may be adapted to implement the descriptions, functions, procedures, suggestions, methods and/or operational flowcharts disclosed in the present disclosure. The processor 102 may be adapted to control one or more other components of the UE 100 to implement the descriptions, functions, procedures, suggestions, methods and/or operational flowcharts disclosed in the present disclosure. Layers of the radio interface protocol may be implemented in the processor 102. The processor 102 may include ASIC, other chipset, logic circuit and/or data processing device. The processor 102 may be an application processor. The processor 102 may include at least one of DSP, CPU, GPU, a modem (modulator and demodulator). An example of the processor 102 may be found in SNAPDRAGON^{™} series of processors made by Qualcomm^{®}, EXYNOS^{™} series of processors made by Samsung^{®}, A series of processors made by Apple^{®}, HELIO^{™} series of processors made by MediaTek^{®}, ATOM^{™} series of processors made by Intel^{®} or a corresponding next generation processor.

The memory 104 is operatively coupled with the processor 102 and stores a variety of information to operate the processor 102. The memory 104 may include ROM, RAM, flash memory, memory card, storage medium and/or other storage device. When the embodiments are implemented in software, the techniques described herein can be implemented with modules (e.g., procedures, functions, etc.) that perform the descriptions, functions, procedures, suggestions, methods and/or operational flowcharts disclosed in the present disclosure. The modules can be stored in the memory 104 and executed by the processor 102. The memory 104 can be implemented within the processor 102 or external to the processor 102 in which case those can be communicatively coupled to the processor 102 via various means as is known in the art.

The transceiver 106 is operatively coupled with the processor 102, and transmits and/or receives a radio signal. The transceiver 106 includes a transmitter and a receiver. The transceiver 106 may include baseband circuitry to process radio frequency signals. The transceiver 106 controls the one or more antennas 108 to transmit and/or receive a radio signal.

The power management module 141 manages power for the processor 102 and/or the transceiver 106. The battery 142 supplies power to the power management module 141.

The display 143 outputs results processed by the processor 102. The keypad 144 receives inputs to be used by the processor 102. The keypad 144 may be shown on the display 143.

The SIM card 145 is an integrated circuit that is intended to securely store the International Mobile Subscriber Identity (IMSI) number and its related key, which are used to identify and authenticate subscribers on mobile telephony devices (such as mobile phones and computers). It is also possible to store contact information on many SIM cards.

The speaker 146 outputs sound-related results processed by the processor 102. The microphone 147 receives sound-related inputs to be used by the processor 102.

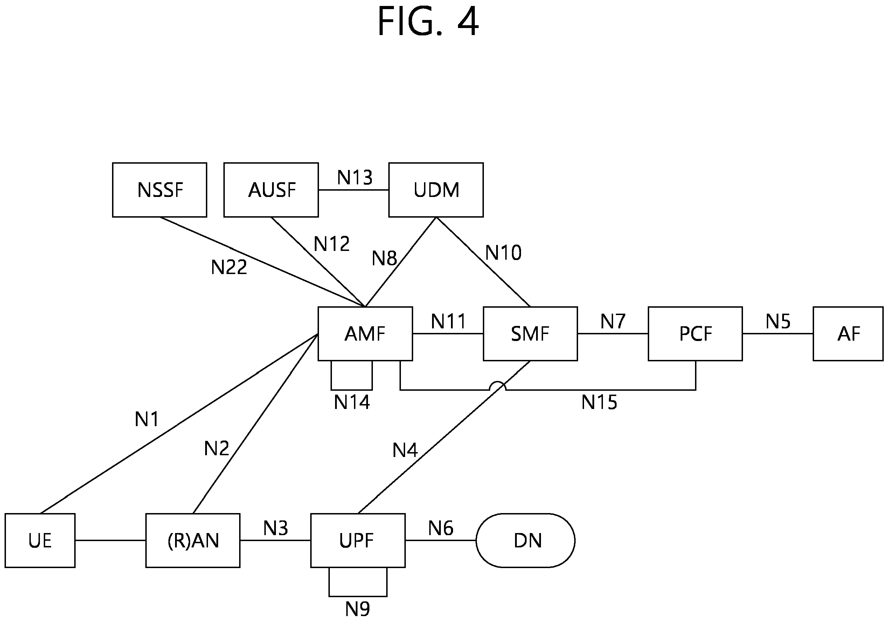

FIG. 4 shows an example of 5G system architecture to which implementations of the present disclosure is applied.

The 5G system (5GS) architecture consists of the following network functions (NF).
- Authentication Server Function (AUSF)
- Access and Mobility Management Function (AMF)
- Data Network (DN), e.g., operator services, Internet access or 3rd party services
- Unstructured Data Storage Function (UDSF)
- Network Exposure Function (NEF)
- Intermediate NEF (I-NEF)
- Network Repository Function (NRF)
- Network Slice Selection Function (NSSF)
- Policy Control Function (PCF)
- Session Management Function (SMF)
- Unified Data Management (UDM)
- Unified Data Repository (UDR)
- User Plane Function (UPF)
- UE radio Capability Management Function (UCMF)
- Application Function (AF)
- User Equipment (UE)
- (Radio) Access Network ((R)AN)
- 5G-Equipment Identity Register (5G-EIR)
- Network Data Analytics Function (NWDAF)
- CHarging Function (CHF)

Furthermore, the following network functions may be considered.
- Non-3GPP InterWorking Function (N3IWF)
- Trusted Non-3GPP Gateway Function (TNGF)
- Wireline Access Gateway Function (W-AGF)

FIG. 4 depicts the 5G system architecture in the non-roaming case, using the reference point representation showing how various network functions interact with each other.

In FIG. 4, for the sake of clarity of the point-to-point diagrams, the UDSF, NEF and NRF have not been depicted. However, all depicted Network Functions can interact with the UDSF, UDR, NEF and NRF as necessary.

For clarity, the UDR and its connections with other NFs, e.g., PCF, are not depicted in FIG. 4. For clarity, the NWDAF and its connections with other NFs, e.g., PCF, are not depicted in FIG. 4.

The 5G system architecture contains the following reference points:
- N1: Reference point between the UE and the AMF.
- N2: Reference point between the (R)AN and the AMF.
- N3: Reference point between the (R)AN and the UPF.
- N4: Reference point between the SMF and the UPF.
- N6: Reference point between the UPF and a Data Network.
- N9: Reference point between two UPFs.

The following reference points show the interactions that exist between the NF services in the NFs.
- N5: Reference point between the PCF and an AF.
- N7: Reference point between the SMF and the PCF.
- N8: Reference point between the UDM and the AMF.
- N10: Reference point between the UDM and the SMF.
- N11: Reference point between the AMF and the SMF.
- N12: Reference point between the AMF and the AUSF.
- N13: Reference point between the UDM and the AUSF.
- N14: Reference point between two AMFs.
- N15: Reference point between the PCF and the AMF in the case of non-roaming scenario, PCF in the visited network and AMF in the case of roaming scenario.
- N16: Reference point between two SMFs, (in roaming case between SMF in the visited network and the SMF in the home network).
- N22: Reference point between the AMF and the NSSF.

In some cases, a couple of NFs may need to be associated with each other to serve a UE.

PDU session establishment procedure is described. Section 4.3.2 of 3GPP TS 23.502 V16.3.0 (2019-12) can be referenced.

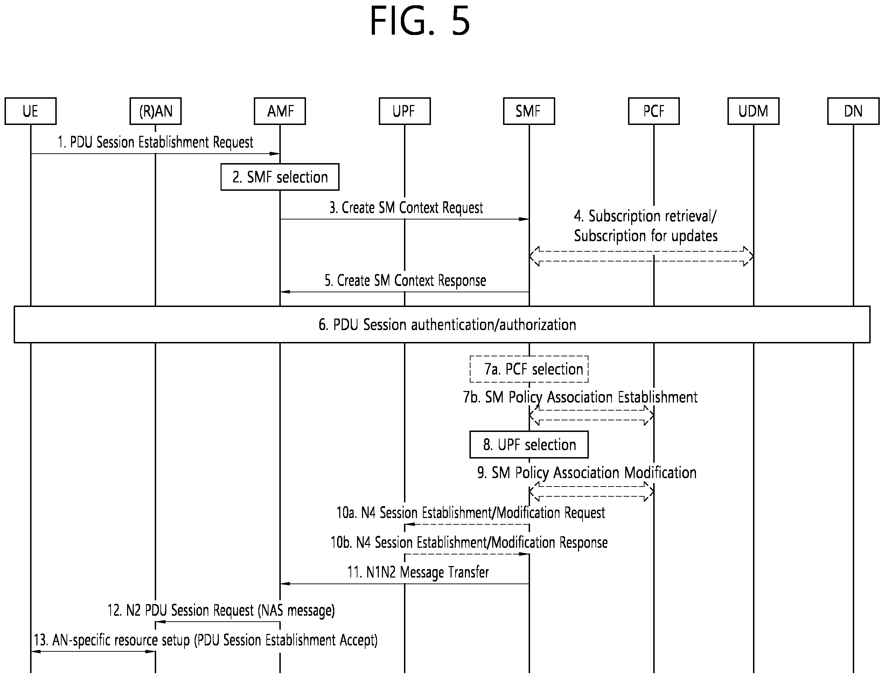

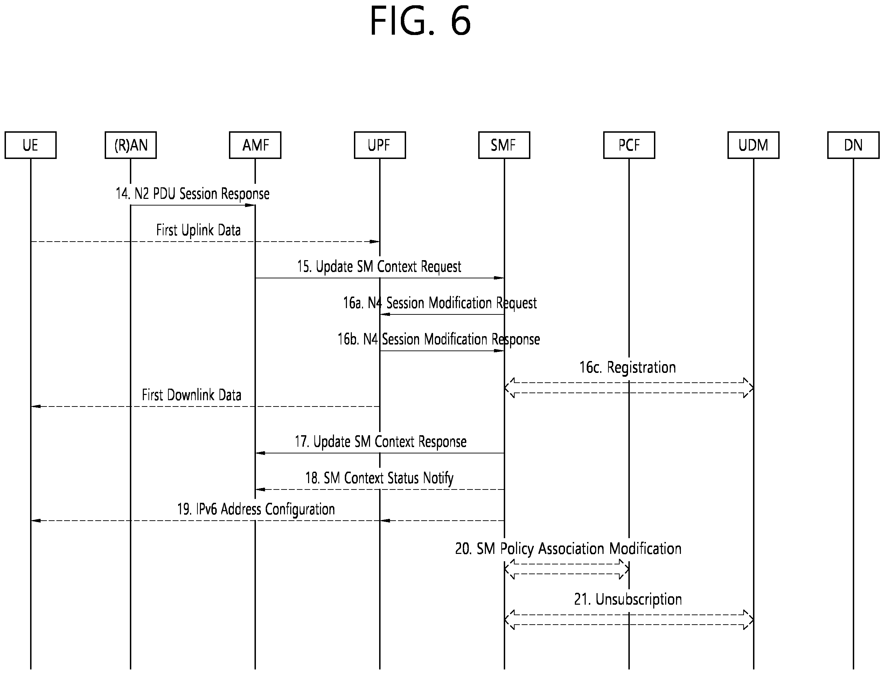

**FIGS. 5** **and** **6** **show an example of a PDU session establishment procedure to which implementations of the present disclosure is applied.**

A PDU session establishment may correspond to:
- a UE initiated PDU session establishment procedure.
- a UE initiated PDU session handover between 3GPP and non-3GPP.
- a UE initiated PDU session handover from EPS to 5GS.
- a network triggered PDU session establishment procedure.

A PDU session may be associated either (a) with a single access type at a given time, i.e., either 3GPP access or non-3GPP access, or (b) simultaneously with multiple access types, i.e., one 3GPP access and one non-3GPP access. A PDU session associated with multiple access types is referred to as multi access PDU (MA PDU) session and it may be requested by access traffic steering, switching, splitting (ATSSS)-capable UEs.

FIGS. 5 and 6 specify the procedures for establishing PDU sessions associated with a single access type at a given time.

The procedure shown in FIGS. 5 and 6 assumes that the UE has already registered on the AMF thus unless the UE is emergency registered the AMF has already retrieved the user subscription data from the UDM.

First, procedures of FIG. 5 are described.
(1) Step 1: In order to establish a new PDU session, the UE generates a new PDU session ID.

The UE initiates the UE requested PDU session establishment procedure by the transmission of a NAS message containing a PDU Session Establishment Request message within the N1 SM container. The PDU Session Establishment Request message includes a PDU session ID, Requested PDU Session Type, a Requested session and service continuity (SSC) mode, 5GSM Capability, protocol configuration options (PCO), SM PDU DN Request Container, UE Integrity Protection Maximum Data Rate, etc.

The Request Type indicates "Initial request" if the PDU session establishment is a request to establish a new PDU session and indicates "Existing PDU Session" if the request refers to an existing PDU session switching between 3GPP access and non-3GPP access or to a PDU session handover from an existing packet data network (PDN) connection in EPC. The Request Type indicates "Emergency Request" if the PDU session establishment is a request to establish a PDU session for emergency services. The Request Type indicates "Existing Emergency PDU Session" if the request refers to an existing PDU session for emergency services switching between 3GPP access and non-3GPP access or to a PDU session handover from an existing PDN connection for emergency services in EPC.

The UE includes the S-NSSAI from the Allowed NSSAI of the current access type. If the Mapping of Allowed NSSAI was provided to the UE, the UE shall provide both the S-NSSAI of the visited PLMN (VPLMN) from the Allowed NSSAI and the corresponding S-NSSAI of the HPLMN from the Mapping Of Allowed NSSAI.

(2) Step 2: The AMF selects an SMF. If the Request Type indicates "Initial request" or the request is due to handover from EPS or from non-3GPP access serving by a different AMF, the AMF stores an association of the S-NSSAI(s), the data network name (DNN), the PDU session ID, the SMF ID as well as the Access Type of the PDU session.

If the Request Type is "initial request" and if the Old PDU session ID indicating the existing PDU session is also contained in the message, the AMF selects an SMF and stores an association of the new PDU Session ID, the S-NSSAI(s), the selected SMF ID as well as Access Type of the PDU Session.

If the Request Type indicates "Existing PDU Session", the AMF selects the SMF based on SMF-ID received from UDM. The AMF updates the Access Type stored for the PDU session.

If the Request Type indicates "Existing PDU Session" referring to an existing PDU session moved between 3GPP access and non-3GPP access, then if the serving PLMN S-NSSAI of the PDU session is present in the Allowed NSSAI of the target access type, the PDU session establishment procedure can be performed in the following cases:
- the SMF ID corresponding to the PDU session ID and the AMF belong to the same PLMN;
- the SMF ID corresponding to the PDU session ID belongs to the HPLMN;

Otherwise the AMF shall reject the PDU session establishment request with an appropriate reject cause.

The AMF shall reject a request coming from an emergency registered UE and the Request Type indicates neither "Emergency Request" nor "Existing Emergency PDU Session".

(3) Step 3: If the AMF does not have an association with an SMF for the PDU session ID provided by the UE (e.g., when Request Type indicates "initial request"), the AMF invokes Create SM Context Request procedure (e.g., Nsmf_PDUSession_CreateSMContext Request). If the AMF already has an association with an SMF for the PDU session ID provided by the UE (e.g., when Request Type indicates "existing PDU Session"), the AMF invokes Update SM Context Request procedure (e.g., Nsmf_PDUSession_UpdateSMContext Request).

The AMF sends the S-NSSAI of the serving PLMN from the Allowed NSSAI to the SMF. For roaming scenario in local breakout (LBO), the AMF also sends the corresponding S-NSSAI of the HPLMN from the Mapping Of Allowed NSSAI to the SMF.

The AMF ID is the UE's GUAMI which uniquely identifies the AMF serving the UE. The AMF forwards the PDU session ID together with the N1 SM container containing the PDU Session Establishment Request message received from the UE. The generic public subscription identifier (GPSI) shall be included if available at AMF.

The AMF provides the PEI instead of the SUPI when the UE in limited service state has registered for emergency services without providing a SUPI. In case the UE in limited service state has registered for Emergency services with a SUPI but has not been authenticated, the AMF indicates that the SUPI has not been authenticated. The SMF determines that the UE has not been authenticated when it does not receive a SUPI for the UE or when the AMF indicates that the SUPI has not been authenticated.

The AMF may include a PCF ID in the Nsmf_PDUSession_CreateSMContext Request. This PCF ID identifies the home PCF (H-PCF) in the non-roaming case and the visited PCF (V-PCF) in the LBO roaming case.

(4) Step 4: If session management subscription data for corresponding SUPI, DNN and S-NSSAI of the HPLMN is not available, then SMF may retrieve the session management subscription data from the UDM and subscribes to be notified when this subscription data is modified.

(5) Step 5: The SMF transmits either Create SM Context Response message (e.g., Nsmf_PDUSession_CreateSMContext Response) or Update SM Context Response message (e.g., Nsmf_PDUSession_UpdateSMContext Response) to the AMF, depending on the request received in step 3.

If the SMF received Nsmf_PDUSession_CreateSMContext Request in step 3 and the SMF is able to process the PDU session establishment request, the SMF creates an SM context and responds to the AMF by providing an SM Context ID.

When the SMF decides to not accept to establish a PDU session, the SMF rejects the UE request via NAS SM signaling including a relevant SM rejection cause by responding to the AMF with Nsmf_PDUSession_CreateSMContext Response. The SMF also indicates to the AMF that the PDU session ID is to be considered as released, the SMF proceeds to step 20 below and the PDU session establishment procedure is stopped.

(6) Step 6: Optional secondary authentication/authorization may be performed.

(7a) Step 7a: If dynamic policy and charging control (PCC) is to be used for the PDU session, the SMF may perform PCF selection.

(7b) Step 7b: The SMF may perform an SM Policy Association Establishment procedure to establish an SM Policy association with the PCF and get the default PCC rules for the PDU session.

(8) Step 8: The SMF selects one or more UPFs.

(9) Step 9: The SMF may perform an SMF initiated SM Policy Association Modification procedure to provide information on the policy control request trigger condition(s) that have been met.

(10) Step 10: If Request Type indicates "initial request", the SMF may initiate an N4 Session Establishment procedure with the selected UPF. Otherwise, the SMF may initiate an N4 Session Modification procedure with the selected UPF

In step 10a, the SMF may send an N4 Session Establishment/Modification Request to the UPF and provides packet detection, enforcement and reporting rules to be installed on the UPF for this PDU session. In step 10b, the UPF may acknowledge by sending an N4 Session Establishment/Modification Response.

(11) Step 11: The SMF transmits a N1N2Message Transfer message (e.g., Namf_Communication_N1N2MessageTransfer) to the AMF.

The N1N2Message Transfer message may include N2 SM information. The N2 SM information carries information that the AMF shall forward to the (R)AN which may include:
- The CN Tunnel Info: Core network address(es) of the N3 tunnel corresponding to the PDU session;
- One or multiple quality of service (QoS) profiles and the corresponding QoS flow IDs (QFIs);
- The PDU session ID: indicate to the UE the association between (R)AN resources and a PDU session for the UE.
- S-NSSAI with the value for the serving PLMN (i.e., the HPLMN S-NSSAI or, in LBO roaming case, the VPLMN S-NSSAI).
- User Plane Security Enforcement information determined by the SMF.
- If the User Plane Security Enforcement information indicates that integrity protection is "Preferred" or "Required(or Mandatory)", the SMF also includes the UE Integrity Protection Maximum Data Rate as received in the PDU Session Establishment Request message.
- Redundancy sequence number (RSN) parameter

The N1N2Message Transfer message may include N1 SM container. The N1 SM container contains the PDU Session Establishment Accept message that the AMF shall provide to the UE. The PDU Session Establishment Accept message includes S-NSSAI from the Allowed NSSAI. For LBO roaming scenario, the PDU Session Establishment Accept message includes the S-NSSAI from the Allowed NSSAI for the VPLMN and also it includes the corresponding S-NSSAI of the HPLMN from the Mapping Of Allowed NSSAI that SMF received in step 3.

Multiple QoS Rules, QoS flow level, QoS parameters if needed for the QoS Flow(s) associated with those QoS rule(s) and QoS Profiles may be included in the PDU Session Establishment Accept message within the N1 SM container and in the N2 SM information.

If the PDU session establishment failed anywhere between step 5 and step 11, then the N1N2Message Transfer message shall include the N1 SM container with a PDU Session Establishment Reject message and shall not include any N2 SM information. The (R)AN sends the NAS message containing the PDU Session Establishment Reject message to the UE. In this case, steps 12-17 are skipped.

(12) Step 12: The AMF sends the NAS message containing PDU Session ID and PDU Session Establishment Accept message targeted to the UE and the N2 SM information received from the SMF within the N2 PDU Session Request message to the (R)AN.

(13) Step 13: The (R)AN may issue AN specific signaling exchange with the UE that is related with the information received from SMF. For example, in case of a NG-RAN, an RRC connection reconfiguration may take place with the UE establishing the necessary NG-RAN resources related to the QoS rules for the PDU session request received in step 12.

The (R)AN forwards the NAS message (PDU Session ID, N1 SM container (PDU Session Establishment Accept message)) provided in step 12 to the UE. The (R)AN shall only provide the NAS message to the UE if the AN specific signaling exchange with the UE includes the (R)AN resource additions associated to the received N2 command.

If the N2 SM information is not included in the step 11, then the following steps 14 to 16b and step 17 are omitted.

Now, procedures of FIG. 6, which follow the procedures of FIG. 5, are described.

(14) Step 14: The (R)AN transmits a N2 PDU Session Response message to the AMF. The N2 PDU Session Response message may include PDU session ID, Cause, N2 SM information (PDU Session ID, AN Tunnel Info, List of accepted/rejected QFI(s), User Plane Enforcement Policy Notification)), etc.

(15) Step 15: The AMF transmits an Update SM Context Request message (e.g., Nsmf_PDUSession_UpdateSMContext Request) to the SMF. The AMF forwards the N2 SM information received from (R)AN to the SMF.

(16a) Step S16a: The SMF initiates an N4 Session Modification procedure with the UPF. The SMF provides AN Tunnel Info to the UPF as well as the corresponding forwarding rules.

(16b) Step S16b: The UPF provides an N4 Session Modification Response to the SMF.

After this step, the UPF may deliver any DL packets to the UE that may have been buffered for this PDU session.

(16c) Step 16c: If the SMF has not yet registered for this PDU session, then the SMF may register with the UDM for a given PDU Session.

(17) Step 17: The SMF transmits an Update SM Context Response message (e.g., Nsmf_PDUSession_UpdateSMContext Response) to the AMF.

After this step, the AMF forwards relevant events subscribed by the SMF.

(18) Step 18: If during the procedure, any time after step 5, the PDU session establishment is not successful, the SMF may inform the AMF by invoking Nsmf_PDUSession_SMContextStatusNotify (Release). The SMF may also release any N4 session(s) created, any PDU session address if allocated (e.g., IP address) and release the association with PCF, if any. In this case, step 19 is skipped.

(19) Step 19: In the case of PDU Session Type IPv6 or IPv4v6, the SMF may generate an IPv6 Router Advertisement and send it to the UE.

(20) Step 20: The SMF may perform SMF initiated SM Policy Association Modification.

(21) Step 21: If the PDU Session establishment failed after step 4, the SMF may unsubscribe to the modifications of session management subscription data, if the SMF is no more handling a PDU session of the UE.

### <Services based on Artificial Intelligence(AI)/Machine Learning (ML)>

3GPP is discussing ways to support AI/ML-based services for 5GS.

For example, along with 5GS assistance, AI/ML services and transport are being discussed to support distribution, transfer, and training of AI/ML models for various applications. For example, applications may include image/voice recognition, robot control, automotive, etc.

AI/ML operations can include three main types, for example
- AI/ML operation splitting between AI/ML endpoints
- AI/ML model/data distribution and sharing over 5G system
- Distributed/Federated Learning (FL) over 5G system

The following examples illustrate objectives of how AI/ML service providers can utilize 5GS as a platform to provide intelligent transmission support for application layer AI/ML operations.
1. Objective 1: Study possible architectural and functional extensions to support application layer AI/ML operations.
   a. Support network resource utilization monitoring in 5G systems related to UEs to support Application AI/ML operations in conjunction with AI/ML model providers.
   b. 5GS information exposure extensions to the 5GC NF(s) to expose UE and/or network state and performance predictions (e.g., location, QoS, load, congestion, etc.). Support for whether and how to expose such information to the UE and/or authorized third parties to support application AI/ML operations.
   c. Enhancements of external parameter provisioning for 5GC based on application AI/ML operations (e.g., expected UE activity behaviors, expected UE mobility, etc.).
   d. Investigate enhancements to other 5GC features that can be used to support application AI/ML operations.
2. Objective 2: Study possible QoS, policy enhancements to support application AI/ML operational traffic while supporting general (non-application AI/ML) 5GS user traffic.
3. Objective 3: To study if and how 5GS can provide support to AFs and UEs to manage FL operations and model distribution/redistribution (e.g., selecting FL members, monitoring group performance, and allocating and ensuring appropriate network resources). To facilitate collaborative application AI/ML-based federated learning operations between application clients and application servers running on UEs, such research may be conducted.

All UEs participating in a given Application AI/ML operation can be served by the same S-NSSAI as the AF.

The following are examples of three major AI/ML operations.

Artificial intelligence (AI)/machine learning (ML) is being used in a variety of applications across industries. In mobile communication systems, mobile devices (e.g., smartphones, cars, robots) are increasingly replacing traditional algorithms (e.g., speech recognition, image recognition, video processing) with AI/ML models to enable applications.

5G systems can support at least three types of AI/ML operations. The following examples represent the three types of AI/ML operations:
- AI/ML operation splitting between AI/ML endpoints;
- AI/ML model/data distribution and sharing over 5G system;
- Distributed/Federated Learning over 5G system;

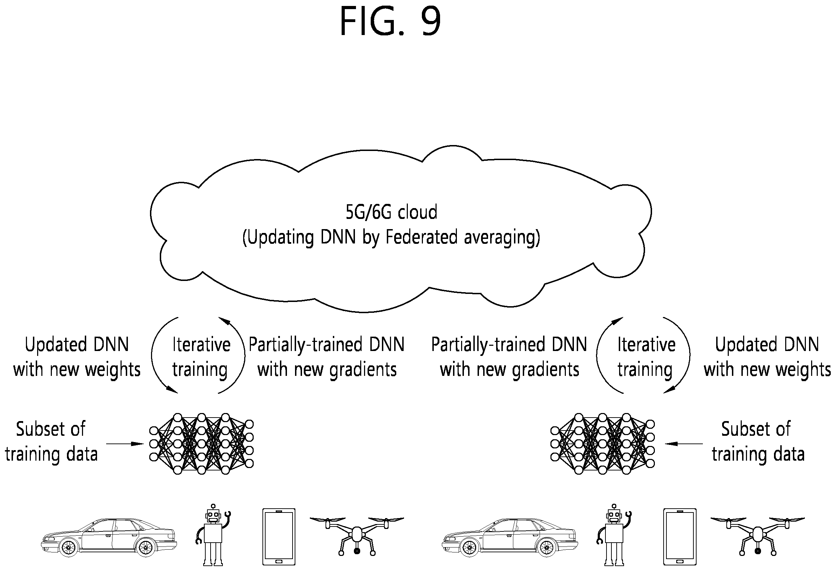

The example in Figure 9 shows an example of splitting AI/ML operation between AI/ML endpoints.

The following drawings are intended to illustrate specific embodiments of the present disclosure. The designations of specific devices or the designations of specific signals/messages/fields shown in the drawings are for illustrative purposes only, and the technical features of the present disclosure are not limited to the specific designations used in the drawings below.

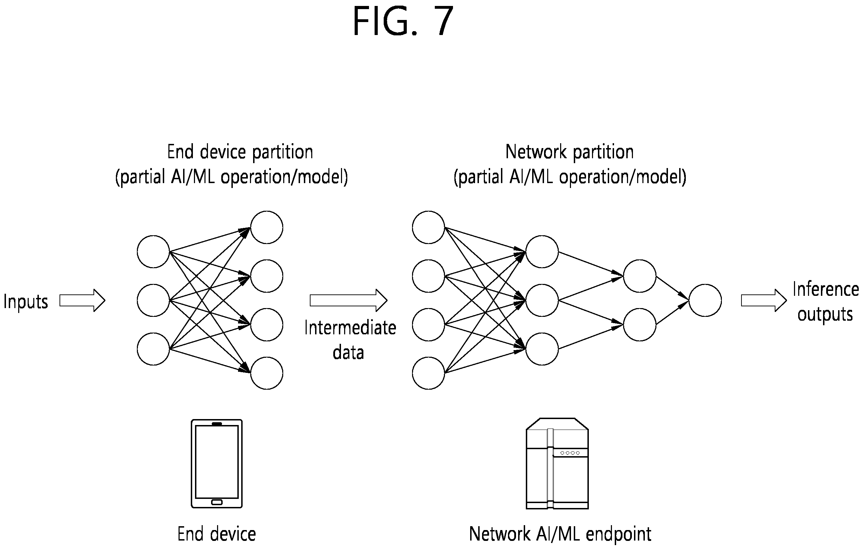

**FIG. 7** **illustrates an example of a split AI/ML, according to one embodiment of the present disclosure.**

The split AI/ML inference approach can be represented as shown in Figure 9. The AI/ML operation/model is split into multiple parts depending on the current operation and environment. Computationally intensive and energy-intensive parts can be offloaded to network endpoints, while privacy-sensitive and latency-sensitive parts can be left on end devices. The device may execute the job/model to a certain part/layer and then send intermediate data to the network endpoint. The network endpoint can execute the remaining parts/layers and provide the inference results back to the device.

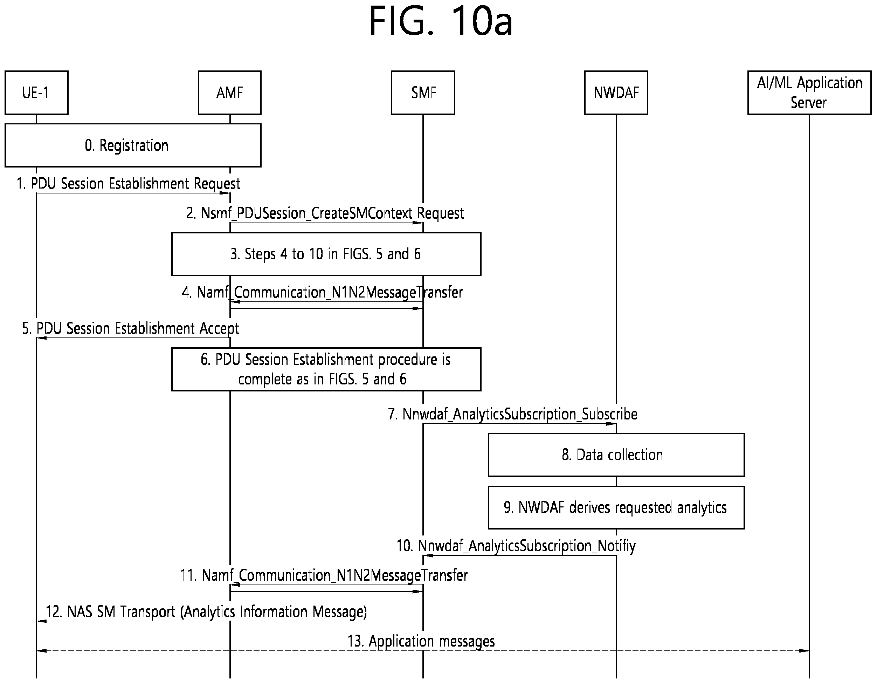

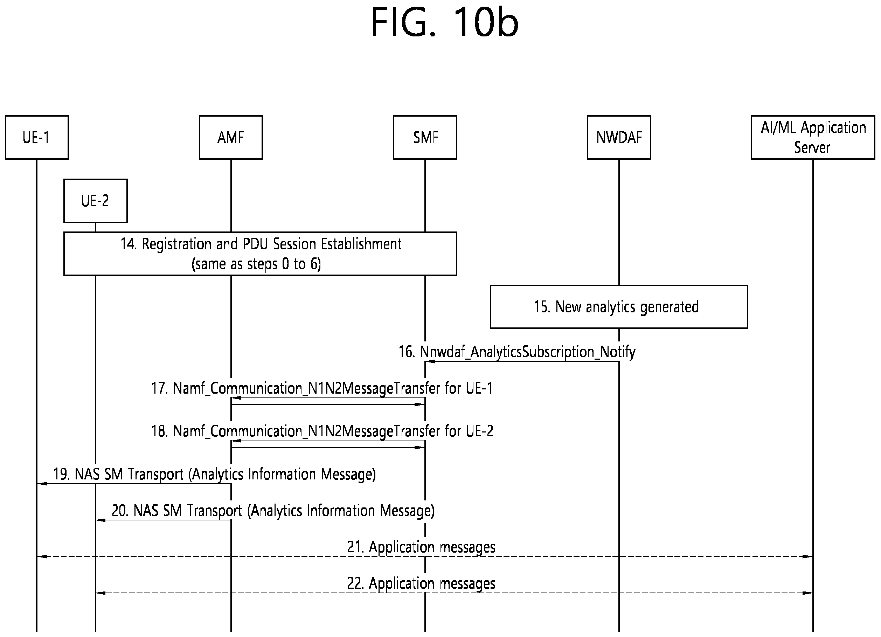

The example in Figure 10 shows an example of AI/ML model/data deployment and sharing over a 5G system.

The following drawings are intended to illustrate specific embodiments of the present disclosure. The designations of specific devices or the designations of specific signals/messages/fields shown in the drawings are for illustrative purposes only, and the technical features of the present disclosure are not limited to the specific designations used in the drawings below.

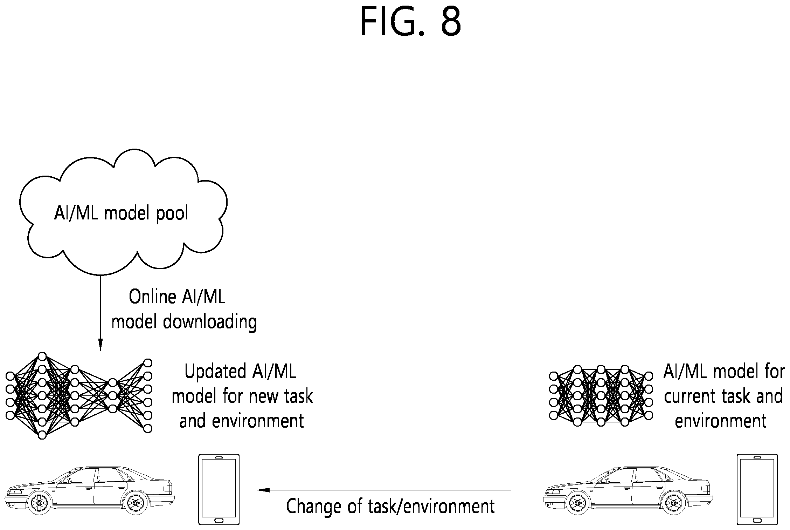

**FIG. 8** **illustrates an example of an AI/ML model deployment, according to one embodiment of the present disclosure.**

The AI/ML model deployment approach can be illustrated in Figure 10. Multifunctional mobile terminals may need to switch AI/ML models based on operation change and environment change. A condition for adaptive model selection may be that the model to be selected is available on the mobile device. However, due to the fact that AI/ML models are becoming increasingly diverse and the limited storage resources of the UE, it may be decided not to preload all candidate AI/ML models to onboard. Online model deployment (i.e., downloading new models) may be required, where AI/ML models can be deployed from the NW endpoint to the device as needed to adapt to changed AI/ML operations and environments. This may require continuous monitoring of model performance on the UE.

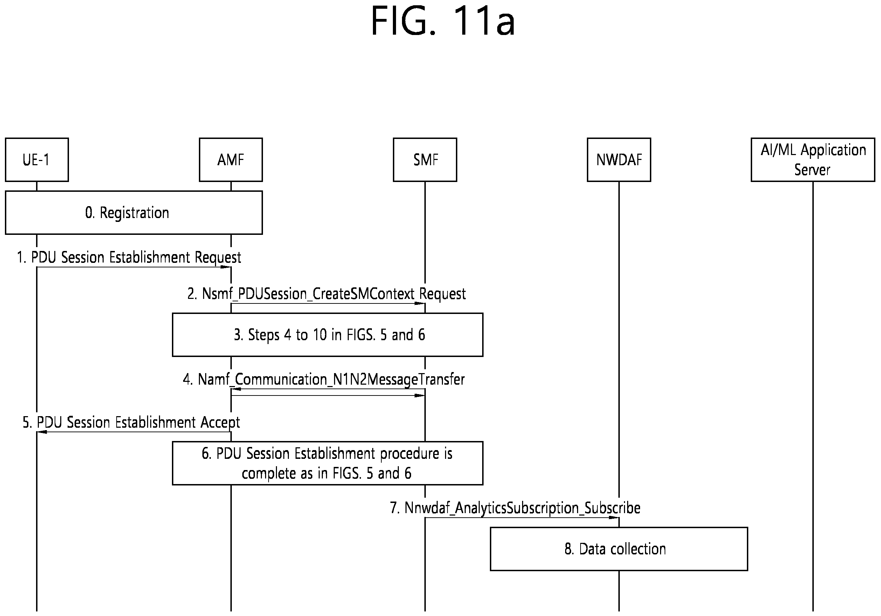

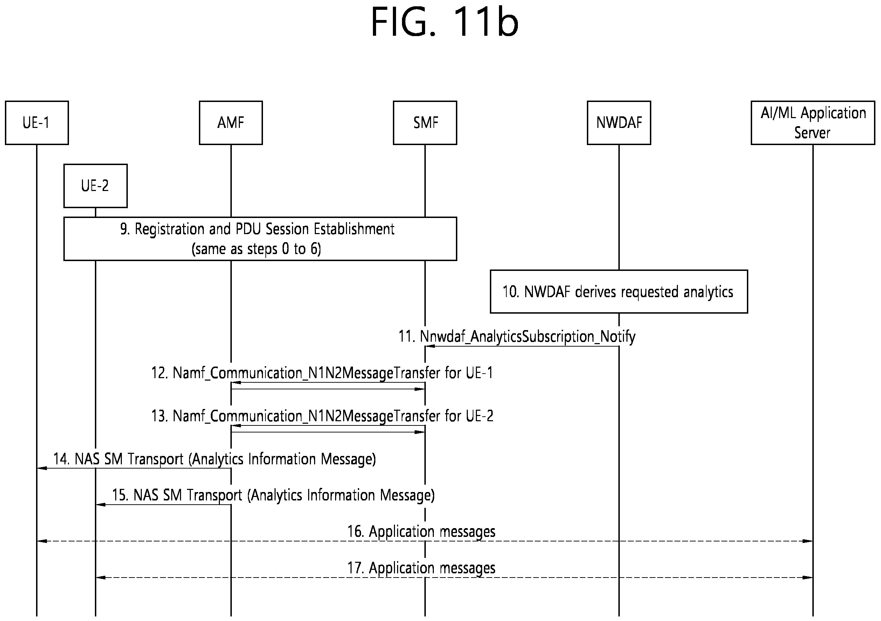

The example in Figure 11 shows an example of distributed/federated learning over a 5G system.

The following drawings are intended to illustrate specific embodiments of the present disclosure. The designations of specific devices or the designations of specific signals/messages/fields shown in the drawings are for illustrative purposes only, and the technical features of the present disclosure are not limited to the specific designations used in the drawings below.

**FIG. 9** **illustrates an example of an AI/ML model deployment, according to one embodiment of the present disclosure.**

An example of a Federated Learning (FL) scheme can be depicted as shown in Figure 11.

The cloud server may aggregate the partially trained local models from each end device to train a global model. Within each training iteration, the UE may perform training based on the model downloaded from the AI server, using local training data. The UE may then report intermediate training results to the cloud server over the 5G UL channel. The server may aggregate the intermediate training results from the UEs and update the global model. The updated global model is then redistributed to the UE and the UE can perform training for the next iteration.

### II. The present disclosure

The present disclosure may be implemented in one or more combinations, such as combinations comprising at least one of those described below. While each of the figures illustrates an embodiment of each disclosure, embodiments of the figures may be implemented in combination with each other.

The description of the methods proposed in the present disclosure may comprise any combination of one or more of the operations/compositions/steps described below. The following methods described below may be performed or used complementarily or in combination.

The exposure of 5GC information to the UE needs to be discussed. For example, specific measures to deal with the exposure of 5GC information to the UE are needed considering the nature of AI/ML services.

Specifically, network conditions in 5G systems (e.g., guaranteed QoS, network congestion, etc.) may affect the behavior of AI/ML services/applications, and it is necessary to consider the characteristics of AI/ML services to handle the exposure of 5GC information to UEs.

Application layer AI/ML models can be downloaded from the AF/AS to the UE to facilitate local intelligence, i.e., the UE can perform reasoning and make decisions locally for use cases such as image recognition, speech recognition, media quality enhancement, etc. To support local decisions, the UE may need information from the 5GC.

Regarding 5GC information exposure, it may be discussed whether and how to enhance the 5GC to expose information to the UE to facilitate application AI/ML tasks (e.g., model training, splitting and inference feedback, etc.):
- Whether and for what purpose it is necessary for the 5GC to expose information or data analytics to the UE, and what kind of information or data analytics the 5GC can provide to the UE to support application AI/ML operations on the UE side.
- How the 5GC exposes such information or data analysis to the UE.

As network conditions in 5G systems (e.g., guaranteed QoS, network congestion, etc.) may affect the behavior of AI/ML services/applications, it is necessary to consider the characteristics of AI/ML services to handle the exposure of 5GC information to UEs.

An approach to handling 5GC information exposure to a UE to support AI and ML services as proposed in various examples of the disclosure may comprise a combination of one or more of the following behaviors/configurations/steps

In this specification, AI/ML Service is used interchangeably with AI/ML-based service, AI/ML traffic, AI/ML application, AI/ML transport, AI/ML operation, AI/ML operational traffic, Application AI/ML operation, Application AI/ML operational traffic, and the like.

The terms User Equipment (UE) and Terminal are used interchangeably in this specification.

Application Function (AF) and Application Server (AS) are used interchangeably in this specification.

For purposes of the present disclosure, analytics information is used interchangeably with analytics data, network analytics data, network analytics information, and the like.

The proposed method to handling 5GC information exposure to the UE to support AI and ML services is also applicable to non-AI/ML services, i.e., the various examples in the present disclosure may be universally applicable to a variety of services. The DNN and/or S-NSSAI for AI/ML services described below may be interpreted as DNN and/or S-NSSAI for other services covered by the approach proposed in this specification.

This specification is focused on proposals. For network data analytics, see TS 23.288 V17.3.0.

Hereinafter, the present disclosure will be described with reference to a first example through a sixth example of the present disclosure. The first example through the sixth example of the disclosure described herein may be implemented in combination.

### 1. The first example of the present disclosure

The first example of the present disclosure describes various examples of an arrangement based on the behavior of the SMF. According to the first example of the present disclosure, an example of 5GC information exposure to a UE performed by the SMF is described.

SMFs serving PDU sessions for AI/ML based services/applications can provide analytics information obtained from NWDAF to UEs.

The UE may enable the exposure of analytics information about the UE during the PDU session establishment procedure and the PDU session modification procedure.

The UE may disable the exposure of analytics information to the SMF during the PDU session modification procedure so that the SMF stops exposing analytics information to the UE.

The exposure of analytics information for active UEs can also be disabled when the PDU session is released.

The SMF may subscribe (or subscribe to) or request analytics information provided by the NWDAF upon receipt of an Analytics Information Exposure Enable Request sent by the UE.

When the SMF receives an activation request for analytics information exposure from the UE, the SMF may check if it has already subscribed (or joined) the Analytics ID associated with the analytics information exposure to the NWDAF based on the same input parameters. If already subscribed (or subscribed), the SMF does not need to subscribe (or subscribe) to the Analytics ID again. Otherwise, the SMF can subscribe (or subscribe) to the Analytics ID for the UE.
- If the exposure of analytics information is no longer required for any UE, the SMF may check if it needs to maintain a subscription to the Analytics ID related to the exposure of analytics information for other UE(s). If not, the SMF may cancel the subscription to the Analytics ID.

The above SMF operations related to subscribing or joining, and unsubscribing, with respect to analytics information provided by NWDAF may be considered shared subscriptions or subscriptions, and unsubscriptions.

Note that in the present disclosure, enabling/disabling analytics information exposure may be interpreted as actions such as requesting/unrequesting information exposure, or subscribing/unsubscribing to it, or turning on/off the feature.

Referring to the examples of FIGS. 10a and 10b below, one example of a procedure for enabling the exposure of analytics information to a UE is described.

The following drawings are intended to illustrate specific embodiments of the present disclosure. The designations of specific devices or the designations of specific signals/messages/fields shown in the drawings are for illustrative purposes only, and the technical features of this specification are not limited to the specific designations used in the drawings below.

FIGS. 10a and 10b illustrate a first example of a signal flow diagram according to the first example of the present disclosure.

The examples of FIGS. 10a and 10b illustrate one example of a procedure that enables the exposure of analytics information to the UE.

0. UE-1 may perform the registration process with the AMF.

In steps 1 to 5 described below, UE-1 may activate the exposure of analytics information to the UE while performing the PDU session establishment procedure previously described in FIGS. 5 and 6 (e.g., see PDU session establishment procedure defined in clause 4.3.2.2.1 of TS 23.502 V17.3.0). Note that the following differences exist between the PDU session establishment procedure described in FIGS. 5 and 6 (e.g., see PDU session establishment procedure defined in clause 4.3.2.2.1 of TS 23.502 V17.3.0) and the examples of FIGS. 10a and 10b:

1. If the UE-1 wishes to obtain analytics information from the 5GC, the UE-1 may include an activation request to expose analytics information in the PDU session establishment request message.

DNNs and S-NSSAIs for PDU sessions are for AI/ML-based services/applications, i.e., application AI/ML operations. Instead of the combination of DNN and S-NSSAI as described above for AI/ML based services/applications, either DNN or S-NSSAI can be for AI/ML based services/applications. This idea can also be applied to Session Management subscription data as described in step 3 below.

The UE may enable to be provided with receive analytics information form the 5GC for various reasons (e.g., because it is necessary to perform an Application AI/ML operation, because AI/ML based services/applications are active, because the UE has entered a specific area related to the Application AI/ML operation, or as directed by the AI/ML Application Server).

2. The SMF may receive a PDU session establishment request that includes an activation request for analytics information exposure.

3. Session Management subscription data related to DNN and S-NSSAI for AI/ML based services/applications in UDM includes the following data for analytics information exposure to UEs. The data below may be stored/managed as separate subscription data instead of being stored/managed as part of the Session Management subscription data. Some or all of the data below may be provided by the AF:
- Analytics information exposure to UE allowed: Indicates whether the UE is authorized to enable analytics information exposure to the UE. This information can also exist per Analytics ID.
- Analytics ID(s) and associated input parameters: identifies the Analytics IDs that may be exposed to the UE and the input parameters for each Analytics ID (e.g., Analytics filter information, Analytics reporting target, Analytics target period, etc.) (e.g., input parameters such as the examples defined in clause 6.1.3 of TS 23.288 V17.3.0). All or part of this information may be provided by the UE (e.g., by providing the Analytics ID(s) that the UE wishes to enable in step 1 and additionally the relevant input parameters), may be provided by the AF, or may be held by the SMF. Instead of requiring the UE or AF to provide the Analytics IDs themselves, it may be possible to index them (e.g., 1 for "QoS Sustainability" analytics, 2 for "User Data Congestion" analytics, etc.
- Analytics ID="Quality of Service (QoS) Sustainability" and input parameters as defined in clause 6.9.1 of TS 23.288 V17.3.0. For example, the location information may be the location information or Area Of Interest (e.g., Cell ID list, Tracking Area Identity (TAI) list, etc.) that is of interest in relation to the Application AI/ML operation (e.g., Federated Learning operation, etc.) or AI/ML based services/applications. 5G QoS Identifier (5QI)(s) may be 5QI(s) related to Application AI/ML operation that serves AI/ML based services/applications.

Some input parameters may be common to all Analytics IDs rather than per Analytics ID. For example, the Analytics target period might be common to all Analytics IDs as statistics and/or predictions.

In addition to "QoS Sustainability" analytics, various Analytics IDs defined in TS 23.288 V17.3.0 and new Analytics IDs to be defined in Rel-18 may apply. Future extensions may also apply to Analytics IDs defined under prior art, including "QoS Sustainability" analytics.

4. Upon receiving an activation request for analytics information exposure from the UE, the SMF may determine, based on the SM subscription data received from the UDM, whether the UE-1 is authorized to activate the analytics information exposure for the UE. In order for the SMF to perform the above authorization check, the local configuration of the SMF may be used in addition to the subscription information, or the local configuration may be used instead of the subscription information.

Even if the UE has not provided an enabling request for analytics information exposure in step 1 above, the SMF may enable analytics information exposure to the UE based on subscription information and/or local configuration. The SMF may perform this behavior all the time, or the SMF may perform this behavior when one or more of the following conditions are met
i) SMF is not congested
ii) DNN and/or S-NSSAI for AI/ML based services/applications are not congested
iii) When a QoS Flow is generated related to providing analytics data/information

If the authorization check is successful, the SMF may include an Accept (or ACK) to enable the request to expose analytics information in the PDU Session Establishment Accept message. Otherwise, the SMF may include a Reject (or NACK) to activate the Analytics Information Exposure Request in the PDU Session Establishment Accept message.

5. The UE-1 may receive a PDU session establishment accept message including an acceptance or rejection of the activation request to expose analytics information.

6. The PDU session establishment procedure may be completed as described in the examples of FIGS. 5 and 6.

7. If the authorization check in step 4 is successful, the SMF may subscribe to the analytics information on "QoS Sustainability" provided by the NWDAF based on the subscription data (or data) described in step 3, if the SMF has not already subscribed (or subscribed) to "QoS Sustainability" analytics for other UEs and/or itself using the same input parameters. For the input parameters included in the subscription request, the SMF may use the subscription data and local configuration. For example, based on UE location information, service area, UE mobility patterns, registration area obtained from AMF, "UE mobility" analysis obtained from NWDAF, expected UE behavior information (e.g., expected UE movement information), areas of interest related to AI/ML based services/applications, etc.

Step 7 can also be performed during the PDU Session Establishment procedure (e.g., after step 2).

If the SMF receives an enabling request for analytics information exposure from a UE and the SMF has not yet subscribed to the NWDAF for that Analytics ID and the SMF needs to subscribe, instead of subscribing immediately, the SMF may wait for a period of time (e.g., the time set in the SMF) to collect enabling requests for analytics information exposure from other UE(s) and perform the subscription to the NWDAF in a merged/combined form.

It is possible that the SMF receives an enabling request for analytics information exposure from the UE, but the SMF has not yet subscribed to the NWDAF for that Analytics ID. In this case, the SMF shall subscribe to the NWDAF for that Analytics ID. The SMF may set the Target of Analytics Reporting to UE-1 (if it is possible to subscribe to a single UE), to the group to which UE-1 belongs, or to any UE.

For a particular group (e.g., any group related to AI/ML operations), if one UE belonging to this group sends an enabling request for analytics information exposure to the SMF on behalf of the group, the SMF may assume that analytics information exposure is also enabled for other UEs belonging to this group. In this case, when the SMF subscribes Analytics ID(s) to the NWDAF, the SMF may create input parameters taking this group into account and subscribe Analytics ID(s) to the NWDAF. The SMF may then provide analytics data/information not only to the UE that made the enable request on behalf of the above, but also to other UEs belonging to this group. Furthermore, the SMF may notify other UEs that analytics information exposure is enabled. In this case, if the representative UE sends a disabling request for analytics information exposure to the SMF, the SMF may consider that analytics information exposure is also disabled for other UEs in this group.

For a specific group (e.g., some group related to AI/ML operation), one UE belonging to this group may perform an enabling request for analytics information exposure on behalf of the group and report to the AI/ML Application Server based on the analytics data/information provided by the SMF. The AI/ML Application Server may then infer/understand the status (e.g., network status based on analytics information such as "QoS Sustainability") of other UEs in the area where this UE is located. For example, if UEs are in the same location, the network conditions at that location may be the same or similar. Therefore, if the AI/ML Application Server knows information about one UE, it can infer the state of the other UEs based on the information about this UE.

Information related to these specific groups may be stored in NFs (e.g., UDM, UDR, SMF, etc.).

The designation of the representative UE may be set in the representative UE, may be assigned by the SMF (e.g., based on subscription information, etc.), or may be assigned by the Application Server. 8. The NWDAF may collect data as in the example specified in clause 6.9.2 of TS 23.288 V17.3.0.

9. The NWDAF may derive the requested analysis as in the example specified in section 6.9.3 of TS 23.288 V17.3.0.

10. The NWDAF can provide notifications to the SMF about "QoS sustainability".

11. The SMF may include the "QoS sustainability" analysis information in the N1 SM information transmitted towards UE-1 by invoking the Namf_Communication_N1N2MessageTransfer service operation in the AMF.

The SMF may provide the analytics data/information received from the NWDAF to the UE as is, partially, simplified, transformed, aggregated or merged.

12. The AMF may send an N1 NAS message to UE-1 including "QoS Sustainability" analysis information.

In order for the AMF to provide analytics information to the UE, new SM NAS messages may be defined, or existing SM NAS messages (e.g., PDU Session Modification Command, etc.) may be extended and used.

Instead of analytics information being provided to the UE via the C-plane as described above, it may be provided via the U-plane. In this case, the SMF sends the analytics information to the UPF, which can then send it to the UE. The C-plane and U-plane approaches can also be used together. For example, a network may use the C-plane method by default to deliver analytics information to the UE and the U-plane method when it needs to deliver analytics information to the UE without delay. To use the U-plane method, the UE may send a PDU Session Establishment Request message or a PDU Session Modification Request message with the address information (e.g., IP address + port) to receive the analytics information. The SMF may send the address information (e.g., IP address + port) of the UPF for the U-plane method in the PDU Session Establishment Accept message or PDU Session Modification Command message. It can also indicate whether the U-plane method is to be used.

13. UE-1 may consider "QoS sustainability" analytics information. For example, to report resources for federated learning operations to the AI/ML application server, the UE-1 may consider the "QoS sustainability" analytics information.

NOTE 1: For example, if UE-1 is informed that it cannot meet the RAN UE Throughput threshold or the QoS Flow Retainability threshold, UE-1 may report this to the AI/ML Application Server so that the AI/ML Application Server does not select UE-1 for FL operations. In this case, the UE-1 may not report to the AI/ML Application Server at all, or it may release the PDU Session. When notified that the QoS Flow Retainability threshold cannot be met, the UE-1 may not send a creation request for the associated GBR QoS Flow to the SMF, or if it has already done so, the UE-1 may request to release it. If the UE-1 is notified that it cannot meet the RAN UE Throughput threshold, the UE-1 may report this to the AI/ML application server. In this case, the AI/ML application server can expect FL operations involving UE-1 to take longer than normal.

In another example, if UE-1 is notified that a RAN UE throughput threshold or QoS Flow maintainability threshold may be met, UE-1 may report this to the AI/ML application server so that the AI/ML application server selects UE-1 for FL operation.

In addition to the above examples, when the UE is provided with analytics information, the UE may also utilize the analytics information for local decision making in relation to various Application AI/ML operations.

14. Same as steps 0 through 6. As a result, UE-2 may activate the exposure of analytics information to the UE during the PDU session establishment procedure. In the example of FIG. 10a and FIG. 10b, the SMF may not subscribe to the analytics information for "QoS Sustainability" provided by the NWDAF after receiving the request from UE-2 to activate the exposure of analytics information, because the SMF has already subscribed to the analytics information for "QoS Sustainability" in step 7.

In this way, when the SMF receives a request for analytics information exposure from a new UE, the SMF may decide not to subscribe to the NWDAF analytics required to process the request. This decision of the SMF may be due to the fact that the input parameters previously used to subscribe to NWDAF analytics are the same or already valid for processing the request from the new UE.

For example, suppose a situation in which an SMF subscribes to NWDAF for "QoS Sustainability" Analytics ID with 5QI=x, Location information=Cell#Y, S-NSSAI=zz as input parameters in response to UE-1's analytics information exposure request. Later, if the "QoS Sustainability" analytics information is required by UE-2's analytics information exposure request and the input parameters are the same as above 5QI, Location information and S-NSSAI, the SMF may decide not to re-subscribe to the above analytics with NWDAF.

However, if the input parameters, such as location information, are different from those already subscribed, the SMF may subscribe in a combined manner to analyze information related to "QoS sustainability" for UE-2 or both UE-1 and UE-2. For example, the combined method may be location information covering both UE-1 and UE-2. If the SMF is already subscribed with Target of Analytics Reporting set to UE-1 for the subscribed Analytics ID, the SMF may subscribe by adding UE-2. Alternatively, if UE-1 and UE-2 belong to the same group, the SMF may subscribe to that group, or subscribe to any UE. These operations can also be interpreted as updating/modifying/complementing an existing subscription, rejoining, etc.

15. NWDAF may derive new analytics by considering the most recent data collected.

16. The NWDAF may provide notifications to the SMF about "QoS sustainability".

17. Step 17 can be performed in the same way as step 11 described earlier.

18. The SMF may include the "QoS sustainability" analysis information in the N1 SM information sent to UE-2 by invoking the Namf_Communication_N1N2MessageTransfer service operation in the AMF.

19. This can be performed in the same way as step 12 described earlier.

20. The AMF may transmit an N1 NAS message to UE-2 including the "QoS Sustainability" analysis information.

21. This can be performed in the same way as step 13 described earlier.

22. UE-2 may consider "QoS sustainability" analytics information. For example, to report resources for federated learning operations to the AI/ML application server, UE-2 may consider "QoS sustainability" analytics information.

NOTE 2: Steps 21 and 22 can be performed in parallel.

When the SMF subscribes to NWDAF with an Analytics ID, the SMF may store/manage which UE(s) the subscription is for (or which UE(s) the subscription is for, or which UE(s) the enable request is for). The SMF may store/manage the information based on a per UE and/or per group basis. For example, for a subscription to an Analytics ID that can be identified by a Subscription Correlation ID (or Notification Correlation ID or URI of the generated subscription or Notification URI), the SMF may store/manage a list of associated UEs and/or a list of groups. Depending on the enable for analytics information exposure, new UEs and/or groups may be added to the list to be enabled, and depending on the disable for analytics information exposure, UEs and/or groups may be removed from the list to be disabled.

The following drawings are intended to illustrate specific embodiments of the present disclosure. The designations of specific devices or the designations of specific signals/messages/fields shown in the drawings are for illustrative purposes only, and the technical features of this specification are not limited to the specific designations used in the drawings below.

**FIGS. 11a** **and** **11b** **illustrate a second example of a signal flow diagram according to the first example of the present disclosure.**

FIGS. 11a and 11b illustrate an example scenario where the SMF receives a request from UE-2 to expose analytics information, following a request from UE-1 to expose analytics information, where the SMF has subscribed to the required Analytics ID with NWDAF, but the SMF has not yet received analytics information from NWDAF.

After receiving the analytics information from the NWDAF, the SMF may then provide the analytics information to the UE-1 and UE-2. For example, it may be understood that steps 0-8 of FIGS. 11a and 11b correspond to steps 0-8 of FIGS. 10a and 10b, step 9 of FIGS. 11a and 11b corresponds to step 14 of FIGS. 10a and 10b, step 10 of FIGS. 11a and 11b corresponds to step 9 of FIGS. 10a and 10b, and steps 11-17 of FIGS. 11a and 11b correspond to steps 16-22 of FIGS. 10a and 10b.

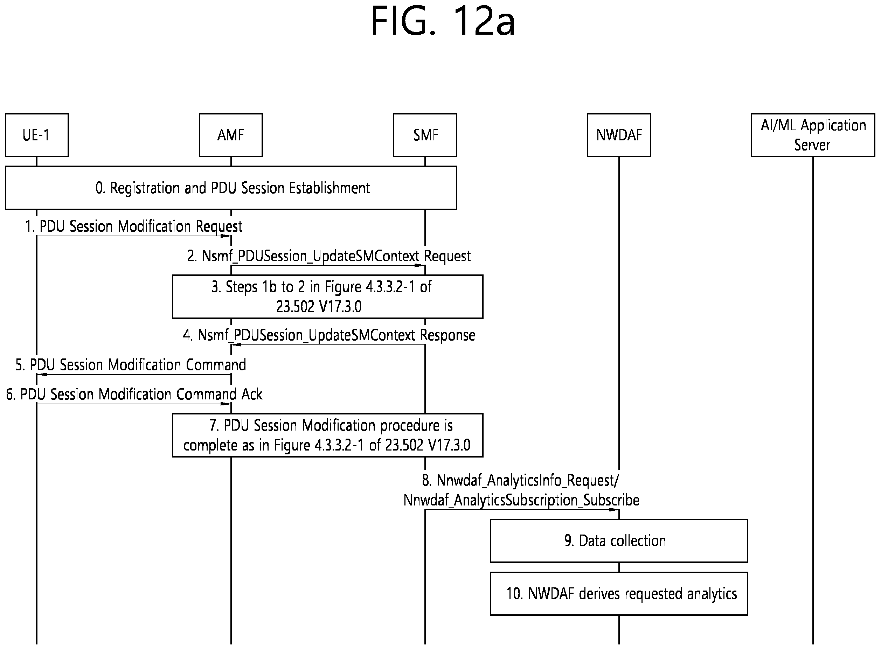

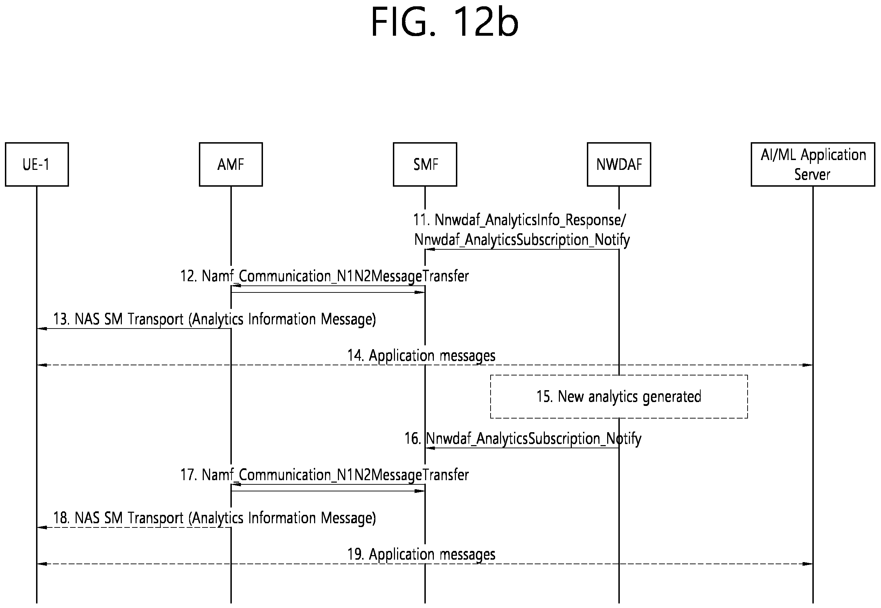

Referring to FIGS. 12a and 12b, an example of enabling analytics information exposure during the PDU session modification procedure will be described.

The following drawings are intended to illustrate specific embodiments of the present disclosure. The designations of specific devices or the designations of specific signals/messages/fields shown in the drawings are for illustrative purposes only, and the technical features of this specification are not limited to the specific designations used in the drawings below.

FIGS. 12a and 12b illustrate a third example of a signal flow diagram according to the first example of the present disclosure.

As illustrated in the examples of FIGS. 12a and 12b, the UE may also enable analytics information exposure to the UE during the PDU Session Modification procedure. With respect to the enabling of analytics information exposure to the UE, the behavior of the UE and the SMF can be interpreted as the previously described in the examples of FIG. 10a and FIG. 10b applying to the PDU Session Modification procedure.

NOTE 3: The UE may use the PDU session modification procedure only to enable the exposure of analytics information to the UE.

The UE may also enable analytics information exposure to the UE via the newly defined Session Management procedure and/or SM NAS message.

When enabling the exposure of analytics information during the PDU session establishment procedure or the PDU session modification procedure, the UE may instruct the SMF for a one-time report, enabling the exposure of analytics information to the UE in the form of a one-time report. In this case, the SMF may request the analytics information by invoking the Nnwdaf AnalyticsInfo_Request service operation.

The UE may also provide information pointing to a continuous report type to the SMF if the UE wishes to enable analytics information exposure to the UE in a continuous report type, as illustrated in the examples of FIGS. 10a and 10b.

A report duration/period may be provided to the SMF if the UE wishes to enable analytics information exposure to UE. For example, the report duration/period can be a relative time (e.g., 30 minutes, 2 hours, etc.) or an absolute time (e.g., months, days, hours, minutes). The report duration/period can also be set to point to a one-time report type (e.g., set to 0). If the UE has enabled a continuous report type, the SMF may unsubscribe at the end of the report duration/period if it no longer needs to maintain the subscription for the Analytics ID(s) it subscribed to with NWDAF (e.g., because it does not need to maintain the subscription for other UEs).

If the UE has enabled analytics information exposure to UE as a one-time report type or enabled with a report duration/period, the SMF does not need to disable it.

When the SMF receives analytics data/information from the NWDAF, the SMF may provide it to the UE immediately, or it may provide it in one of the following cases (e.g., examples a to c below). In this way, the SMF may decide when to provide analytics data/information to the UE through negotiation with the UE, based on information set in the SMF, or based on subscription information.
a) The analytics data/information may be provided when the UE is in the connected state. If the UE is in idle state, it may be provided after the UE is in connected state: The SMF may keep the analytics data/information and provide it to the UE when the UE becomes connected; or the AMF may keep the analytics data/information after receiving it from the SMF and provide it to the UE when the UE becomes connected.
b) The analytics data/information may be provided if the user plane of the PDU Session (this PDU Session may be a PDU Session to support AI/ML based services/applications) is activated. For example, if the user plan of the above PDU Session is deactivated, when the PDU Session is activated, the SMF may provide analytics data/information to the UE.
c) If the QoS Flow requested to be created by the UE or the QoS Flow created for the UE is a QoS Flow related to the provision of analytics data/information, the SMF may provide the analytics data/information to the UE.

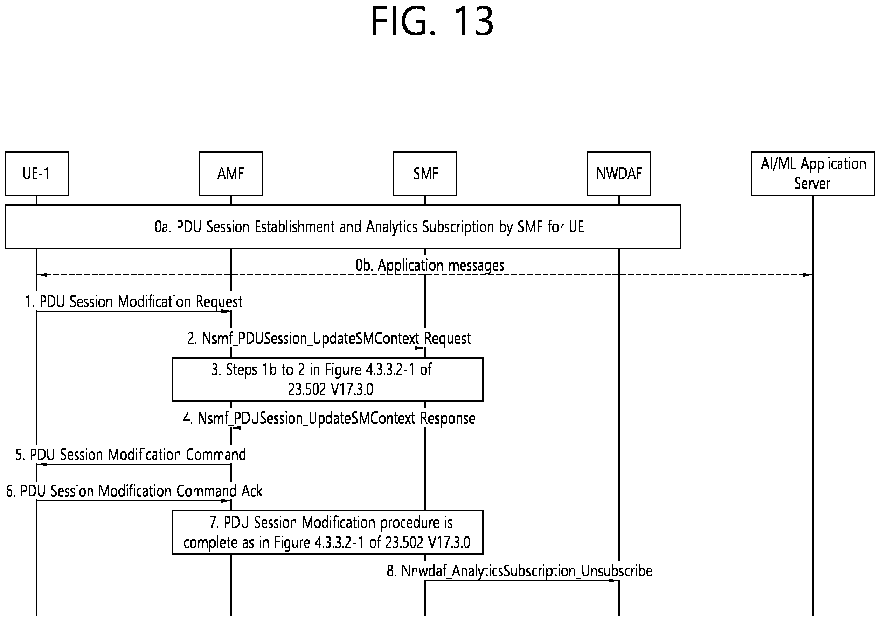

Referring to the example in FIG. 13, an example procedure for disabling the exposure of analytics information for a UE is described.

The following drawings are intended to illustrate specific embodiments of the present disclosure. The designations of specific devices or the designations of specific signals/messages/fields shown in the drawings are for illustrative purposes only, and the technical features of this specification are not limited to the specific designations used in the drawings below.

FIG. 13 illustrates a fourth example of a signal flow diagram according to the first example of the present disclosure.

FIG. 13 shows the procedure for disabling the exposure of analytics information to UEs.

0a. For the UE, a PDU session may be established and analytics information subscription to the NWDAF by the SMF may be performed as previously described in the examples of FIGS. 10a through 12b.

0b. The UE and the AI/ML application server may exchange application messages related to application AI/ML operations.

In steps 1 to 5, the UE-1 may disable the exposure of analytics information to the UE during the PDU session modification procedure defined in clause 4.3.3.2 of TS 23.502 V17.3.0. The example procedure described in the example in Figure 13 has the following differences with respect to the PDU session modification procedure defined in clause 4.3.3.2 of TS 23.502 V17.3.0
1. If the UE wishes to stop obtaining analytics information from the 5GC, the UE may include a request to disable the exposure of analytics information in the PDU Session Modification Request.
   The UE may disable receiving analytics information from the 5GC for various reasons (e.g., if the UE no longer needs to perform Application AI/ML operations, has paused such operations, AI/ML based services/applications are inactive, the UE has a low battery level, the UE is out of the geographical area associated with the Application AI/ML operations, or as instructed by the AI/ML Application Server).
2. The SMF may receive a PDU session modification request that includes a request to disable the exposure of analytics information.
   The SMF may decide to stop exposing analytics information to the UE. This decision and/or the action to stop providing analytics data/information to the UE may be taken in step 4, or it may be taken after the PDU Session Modification procedure has ended.
3. The same operations as steps 1b through 2 in Figure 4.3.3.2-1 of TS 23.502 V17.3.0 may be performed.
4. The SMF may include an ACK (or Accept) to the request to disable exposure of analytics information in the PDU Session Modification Command.
5. The UE may receive a PDU session modification command containing an ACK to the request to disable exposure of analytics information.
6. The UE may send a PDU Session Modification Command Ack to the SMF.
7. The PDU session modification procedure may be completed as specified in Figure 4.3.3.2-1 of TS 23.502 V17.3.0.
8. The SMF may check whether the subscription to the "QoS sustainability" analysis should be maintained for other UE(s) and/or for itself. If it should be maintained, the SMF may decide to keep the subscription. Otherwise, the SMF may unsubscribe from the "QoS Sustainability" analysis for NWDAF.

Step 8 can also be performed during the PDU Session Modification procedure (e.g., after step 2).

The SMF is no longer required to provide analytics information exposure for the UE, and may update/modify the subscription or perform a re-subscription after removing the UE and creating input parameters (e.g., modifying location information, etc.).

The UE may also disable the exposure of analytics information for the UE during the PDU session release procedure. Enabled analytics information exposure for a UE may also be disabled by the SMF when the PDU session is released, even if the UE does not provide a disabling request to the SMF.

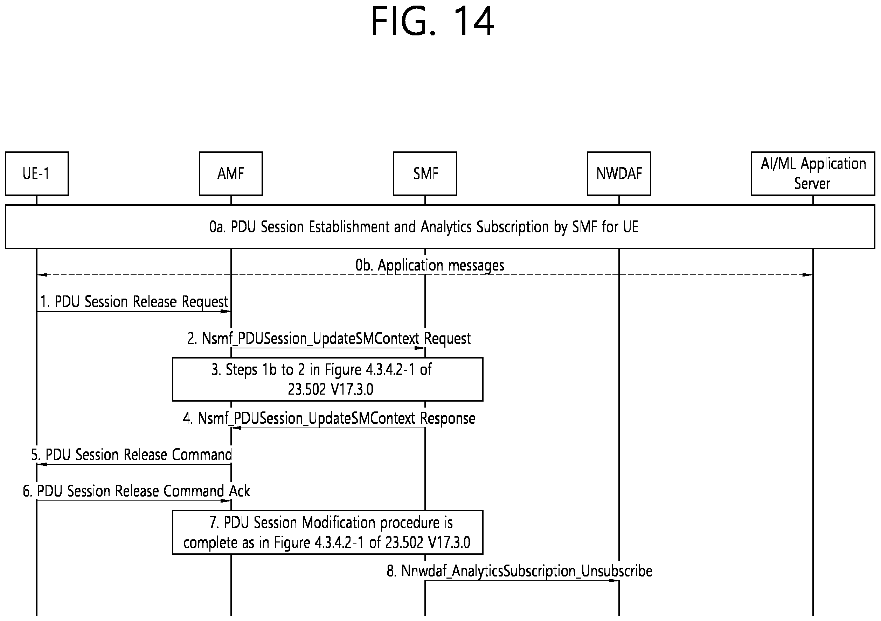

Hereinafter, referring to the example of FIG. 14, an example of disabling the exposure of analytics information during the PDU disconnect procedure is described.

The following drawings are intended to illustrate specific embodiments of the present disclosure. The designations of specific devices or the designations of specific signals/messages/fields shown in the drawings are for illustrative purposes only, and the technical features of this specification are not limited to the specific designations used in the drawings below.

FIG. 14 illustrates a fifth example of a signal flow diagram according to the first example of the present disclosure.

In the example of FIG. 14, the UE may include a disabling request for analytics information exposure when sending the PDU Session Release Request. Even if the disabling request is not included, the SMF may disable or treat analytics information exposure as disabled when the PDU Session is released. The network initiated PDU Session Release procedure may also include information indicating that analytics information exposure is disabled when the SMF sends the PDU Session Release Command to the UE. Step 8 of FIG. 14 may be performed in the same manner as step 8 of FIG. 13.

The UE may also disable analytics information exposure to UE via the newly defined Session Management procedure and/or SM NAS message.

The SMF may disable analytics information exposure to UE, even if no PDU Session has been released and the UE has not requested to disable analytics information exposure to UE. The SMF may disable in various cases as follows
i) When SMF is congested
ii) When DNN and/or S-NSSAI for AI/ML based services/applications is congested
iii) When QoS Flow related to the provision of Analytics data/information is released.

Based on the various descriptions of the first example of the present disclosure, the following descriptions may apply to the UE, SMF, and/or UDM.

The UE may support enabling the exposure of analytics information to the UE. The UE may support disabling the exposure of analytics information to the UE. The UE may obtain analytics information from the SMF.

The SMF may process activation requests and deactivation requests for analytics information exposure sent by the UE.

The UDM may store Session Management subscription data related to the exposure of Analytics information to the UE.

According to the first example of the present disclosure, the method of providing analytics data/information by the SMF to the UE can also be utilized to provide/expose network related data/information(e.g., congestion level of the SMF, DNN/S-NSSAI related congestion level, UPF congestion level, NG-RAN related congestion level/QoS supportability, etc.) to the UE other than the analytics data/information obtained through the NWDAF.

In the first example of the present disclosure, a non-roaming case and a roaming case in which a PDU session is generated in a local break out method are illustrated and described, but the method proposed in the first example of the present disclosure can also be applied to a roaming case in which a PDU session is created in a home routed method.

In accordance with the first example of the disclosure, enabling analytics information exposure to the UE may be interpreted as causing the SMF to enable analytics information exposure to the UE. A UE disabling analytics information exposure to the UE may be interpreted as causing the SMF to disable analytics information exposure to the UE.

### 2. A second example of the present disclosure

The second example of the present disclosure describes various examples of an arrangement based on the operations of the SMF. In accordance with the second example of the present disclosure, an example of 5GC information exposure to a UE performed by the SMF is described.

As a point of reference, the second example of the present disclosure may include various examples described in the first example of the present disclosure. For example, the second example of the present disclosure may disclose descriptions based on the first example of the present disclosure, and may also disclose specific descriptions related to the first example of the present disclosure.

The second example of the disclosure describes an example of 5GC information exposure of a UE performed by an SMF.

AFs may obtain various data analytics provided by the NWDAF as specified in TS 23.288 V17.3.0. When requesting or subscribing to NWDAF analytics, the AF shall provide the analytics reporting audience and analytics filter information required by the Analytics ID to which the AF is requesting or subscribing. For example, for QoS Sustainability analytics, the analytics reporting audience is set to All UEs, and the Analytics Filter information must include QoS requirements and Location information. The Location information may reflect a list of waypoints for the UE(s) that the AF may collect from the UE(s), e.g., via application layer messages.

There may be cases where the AF (i.e., AI/ML Application Server) does not know or has not yet determined which UEs will be involved to operate an AI/ML based service/application. For example, there may be cases where the AI/ML Application Server has not determined candidate UEs for FL actions to be performed. In this case, the AI/ML Application Server may have difficulty determining the input parameters, such as Analytics Reporting Target and Analytics Filter Information, associated with the UEs that are required to request or subscribe to NWDAF analytics.

On the other hand, the UE may decide whether it is interested in operating AI/ML based services/applications or participating in AI/ML related behavior such as FL operations. In this case, if the UE may obtain analytics information from the 5GC, it would be useful to determine whether the UE is capable of performing AI/ML related tasks or to allow the AI/ML application server to manage AI/ML related tasks (e.g., to select FL members by obtaining analytics related information/reports from the UE).

If the 5GC can expose analytics information to the UE, it will help in the operation of AI/ML based services/applications. Examples include the following:
- If the UE receives QoS Sustainability analysis information from the 5GC indicating that the UE is unable to meet the RAN UE Throughput threshold or QoS Flow Retainability threshold, the UE's application layer may, based on the information provided by the UE's NAS layer, do the following
- The application layer of the UE may decide not to participate in the FL operation; or
- The UE's application layer can report to the AI/ML application server that it cannot meet the RAN UE throughput threshold or QoS Flow Retainability threshold, or that the network conditions are poor. Based on the UE's report, the AI/ML application server may decide not to select this UE for FL operations.
- If the UE receives information from the 5GC related to user data congestion analysis information indicating that the congestion level is 'congested', the application layer of the UE may, based on the information provided by the NAS layer of the UE, perform the following:
- The application layer of the UE may decide not to participate in the FL operations; or
- The UE's application layer can report to the AI/ML application server that the network is congested or that network conditions are poor. Based on the UE's report, the AI/ML application server may decide not to select this UE for FL operations.

The following is an overview of the solution SMF proposes for exposing 5GC information to UEs:
SMFs serving PDU sessions for AI/ML based services/applications can provide analytics information obtained from NWDAF to UEs.

The UE may enable the exposure of analytics information to the UE during the PDU session establishment procedure and the PDU session modification procedure.

The UE may disable the exposure of analytics information to the SMF during the PDU session modification procedure so that the SMF stops exposing analytics information to the UE.

The exposure of analytics information to active UEs can also be disabled when the PDU session is released.

The SMF may subscribe (or subscribe to) or request analytics information provided by the NWDAF upon receipt of an Analytics Information Exposure Enable Request sent by the UE.

When the SMF receives an activation request for analytics information exposure from the UE, the SMF may check if it has already subscribed (or joined) the Analytics ID associated with the analytics information exposure to the NWDAF based on the same input parameters. If already subscribed (or subscribed), the SMF does not need to subscribe (or subscribe) to the Analytics ID again. Otherwise, the SMF can subscribe (or subscribe) to the Analytics ID for the UE.
- If the exposure of analytics information is no longer required for any UE, the SMF can check if it needs to maintain a subscription to the Analytics ID associated with the exposure of analytics information for other UE(s). If not, the SMF may cancel the subscription to the Analytics ID.

The above SMF actions related to subscribing or subscribing to, and unsubscribing or unsubscribing from, analytics information provided by NWDAF may be considered shared subscriptions or subscriptions, and unsubscriptions or unsubscriptions.

Referring again to FIGS. 10a and 10b, described earlier, one example of a procedure for enabling the exposure of analytics information to a UE is described.

The examples of FIGS. 10a and 10b illustrate one example of a procedure that enables the exposure of analytics information to the UE.

0. UE-1 can perform the registration procedure with the AMF.

In steps 1 to 5 described below, UE-1 may activate the exposure of analytics information to the UE while performing the PDU session establishment procedure previously described in FIGS. 5 and 6 (e.g., see PDU session establishment procedure defined in clause 4.3.2.2.1 of TS 23.502 V17.3.0). Note that the following differences exist between the PDU session establishment procedure described in FIGS. 5 and 6 (e.g., see PDU session establishment procedure defined in clause 4.3.2.2.1 of TS 23.502 V17.3.0) and the examples of FIGS. 10a and 10b:

1. if the UE-1 wishes to obtain analytics information from the 5GC due to a need or request from the application layer, the UE-1 shall include the following information in the PDU Session Establishment Request
- Indication that the exposure of analytics information to UEs is supported.
- Information to enable the request to disclose analytics information per Analytics ID.

Instead of including an enabling request per Analytics ID, UE-1 may also include the Analytics IDs that the UE-1 wishes to enable with a single enabling request
- (optional) Analytics IDs and associated input parameters for each requested Analytics ID.

DNNs and S-NSSAIs for PDU sessions are for AI/ML-based services/applications, i.e., application AI/ML operations. The AMF can select an SMF based on DNN and S-NSSAI, locally configured data, or the corresponding SMF profile stored in the NRF.

NOTE 1: Assume that the PDU session used for AI/ML-based services/applications is different from the PDU session used for non-AI/ML-based services/applications.

NOTE 2: Depending on the operator, a separate PDU session for each AI/ML based service/application and a common PDU session for all AI/ML based services/applications may be supported. In the latter case, when multiple AI/ML based services/applications require or request analytics information from the UE, the UE obtains the analytics information from the SMF and provides it to each application.

2. The SMF receives a PDU session establishment request message, which may include an indication that UE-1 supports the exposure of analytics information to the UE, analytics information exposure request activation information per analytics ID, and (optionally) analytics IDs and associated input parameters for each requested analytics ID.

If the SMF does not support exposing analytics information to the UE, the SMF may ignore the above information.

3. The session management subscription data associated with DNN and S-NSSAI for AI/ML based services/applications within the UDM shall include the following data on the exposure of analytics information to the UE
- Analytics information exposure to UE allowed: Indicates whether the UE is authorized to enable analytics information exposure to the UE.
- Analytics ID(s) and associated input parameters: Identifies the Analytics ID(s) that may be exposed to the UE and the input parameters for each Analytics ID as defined in clause 6.1.3 of TS 23.288 V17.3.0 (e.g., analytics filter information, analytics reporting target, analytics target period, etc.
- Analytics ID="QoS Sustainability" and the input parameters defined in section 6.9.1 of TS 23.288 V17.3.0.
- Analytics ID="User Data Congestion" and the input parameters defined in section 6.8.1 of TS 23.288 V17.3.0.

4. If the SMF supports the exposure of analytics information to the UE, the SMF receiving the request from the UE-1 to enable the exposure of analytics information may determine whether the UE-1 is authorized to enable the exposure of analytics information to the UE, taking into account the SM subscription data received from the UDM.

If the authorization check is successful, the SMF may include in the PDU session establishment accept message an indication that it supports the exposure of analytics information to the UE and an acceptance of the request to enable the exposure of analytics information. Otherwise, the SMF may include in the PDU session establishment accept message an indication that it supports the exposure of analytics information to the UE and a rejection of the activation of the analytics disclosure request.

NOTE 3: The indication that the SMF supports exposing analytics information to the UE means that the SMF supports all Analytics IDs to be exposed to the UE. This implies that the NWDAF supports all of these Analytics IDs as well. However, it is also possible that the SMF supports exposure to the UE for only some Analytics IDs. In this case, the SMF may inform the UE which Analytics ID(s) it supports and/or does not support. The UE may also enable the AMF to select an SMF that supports exposure to the Analytics ID(s) requested by the UE by including some or all of the information it includes in the PDU Session Establishment Request in step 1 above in the NAS message it uses to transmit the PDU Session Establishment Request, i.e., in the part that is received and acknowledged by the AMF.

If the SMF does not support exposing analytics information to the UE, the SMF does not include an indication that it supports exposing analytics information to the UE or an acceptance/rejection of the activation request. In this case, steps 7 through 13 are not performed.

5. UE-1 receives a PDU Session Establishment Accept.

6. The PDU session establishment procedure may be completed as described in the examples of FIGS. 5 and 6.

7. If the authorization check in step 4 is successful, the SMF may subscribe to the analytics information provided by the NWDAF for the analytics ID requested by UE-1 based on the subscription data described in step 3, if the SMF is not already subscribed to analytics for another UE using the same input parameters. For the input parameters included in the subscription request, the SMF may use the subscription data and local configurations. For example, based on the UE location information, service area, the SMF may determine the location information as one of the input parameters for the "QoS Sustainability" analysis and the Area of Interest as one of the input parameters for the "User Data Congestion" analysis. If UE-1 has provided the input parameters for the requested analysis in step 1, the parameters provided by the UE shall replace the subscription data and local configurations.

The SMF may select a NWDAF that supports the requested analytical information as specified in clause 5.2 of TS 23.288 V17.3.0.

The SMF may select more than one NWDAF because no single NWDAF supports all analytics. In this case, the SMF interacts with each selected NWDAF.

The SMF may store that UE-1 has requested this analytics information.

8. NWDAF may collect data as specified in section 6.9.2 of TS 23.288 V17.3.0.

9. The NWDAF may derive the requested analysis as specified in section 6.9.3 of TS 23.288 V17.3.0.

10. The NWDAF may provide notifications to SMFs about requested analytics.

Based on the information stored in step 7, namely UE-1, the SMF may determine the UE(s) to which the SMF should provide this analytics information.

11. The SMF may include the analytics information in the N1 SM information transmitted towards UE-1 by invoking the Namf_Communication_N1N2MessageTransfer service operation in the AMF.

NOTE 4: To provide analytics information to the UE, either existing SM NAS messages with new information elements (e.g., PDU Session Modification Command) or new SM NAS messages can be used.

12. The AMF may send N1 NAS messages containing analytics information to UE-1. The NAS layer in UE-1 can provide the analytics information to the application layer.

The application layer of the UE-1 may consider the provided analytics information in its AI/ML related behavior. For example, to report resources for federated learning operations to the AI/ML application server, and/or to decide not to participate in FL operations to avoid interacting with the AI/ML application server, the application layer of UE-1 may consider the provided analytics information in AI/ML related actions.

14. This step can be performed in the same way as steps 0 through 6. As a result, the UE-2 may enable the exposure of analytics information to the UE during the PDU session establishment procedure.

The SMF may store that UE-2 has requested this analytics information.

After receiving the activation request for analytics information exposure from UE-2, in the example of FIG. 10a and FIG. 10b, the SMF does not subscribe to the analytics information provided by the NWDAF for the analytics ID requested by UE-2 because the SMF has already subscribed to the analytics information in step 7.

However, the SMF may subscribe to analytics information for the Analytics ID(s) requested by UE-2 in a combined manner for UE-2 or both UE-1 and UE-2 (e.g., location information that includes both UE-1 and UE-2) if the inputs, such as location information, are different from those already subscribed to.

15. The NWDAF may derive new analytics by considering the most recent data collected.

16. The NWDAF may provide notifications to SMFs about requested analytics.

Based on the information stored in steps 7 and 14, the SMF may determine which UEs (i.e., UE-1 and UE-2) the SMF should provide this analytics information to.

17. This can be performed the same as step 11.

18. The SMF may invoke the Namf_Communication_N1N2MessageTransfer service operation on the AMF to transfer the analytics information contained within the N1 SM information to UE-2.

19. This can be performed the same as step 12.

20. The AMF may send N1 NAS messages containing analytics information to UE-2. The NAS layer in UE-2 can provide the analytics information to the application layer.

21. This can be performed the same as in step 13.

22. The application layer of UE-2 may consider the provided analytics information in its AI/ML related operation. For example, to report resources for federated learning tasks to the AI/ML application server, and/or to decide not to participate in FL tasks to avoid interacting with the AI/ML application server, the application layer of UE-2 may take the provided analytics information into account in AI/ML related operations.

NOTE 5: Steps 21 and 22 can be performed in parallel.

The UE can also enable the exposure of analytics information to the UE during the PDU session modification procedure.

NOTE 6: The UE may use the PDU session modification procedure only to enable the exposure of analytics information to the UE.

NOTE 7: Different SMFs can be selected for UE-1 and UE-2. The examples in FIG. 10a and FIG. 10b show the case where the same SMF is selected for both UEs to illustrate how this example works.

When enabling the exposure of analytics information during the PDU session establishment procedure or the PDU session modification procedure, the UE may enable the exposure of analytics information to the SMF in the form of a one-time report by indicating to the SMF the one-time report type. In this case, the SMF may request the analytics information by invoking the Nnwdaf AnalyticsInfo_Request service operation.

Referring back to FIG. 13, described earlier, one example of a procedure for disabling the exposure of analytics information to the UE is described.

The example in FIG. 13 illustrates one example of a procedure to disable the exposure of analytics information to the UE.

0a. For the UE, a PDU session may be established and analytics information subscription to the NWDAF by the SMF may be performed as previously described in the examples of FIGS. 10a through 12b.

0b. The UE and the AI/ML application server may exchange application messages related to application AI/ML operation.

In steps 1 to 5, the UE-1 may disable the exposure of analytics information to the UE during the PDU session modification procedure defined in clause 4.3.3.2 of TS 23.502 V17.3.0. The example procedure described in the example in FIG. 13 has the following differences with respect to the PDU session modification procedure defined in clause 4.3.3.2 of TS 23.502 V17.3.0
1. If the UE wishes to stop obtaining analytics information from the 5GC, the UE may include a request to disable the exposure of analytics information in the PDU Session Modification Request.
2. The SMF may receive a PDU session modification request that includes a request to disable the exposure of analytics information. 2.
   The SMF may decide to stop exposing analytics information to the UE.
3. The same operations as steps 1b through 2 in Figure 4.3.3.2-1 of TS 23.502 V17.3.0 may be performed.
4. The SMF may include an ACK (or Accept) to the request to disable the exposure of analytics information in the PDU Session Modification Command.
5. The UE may receive a PDU session modification command including an ACK to the request to disable the exposure of analytics information.
6. The UE may send a PDU Session Modification Command Ack to the SMF.
7. The PDU session modification procedure may be completed as specified in Figure 4.3.3.2-1 of TS 23.502 V17.3.0.
8. The SMF may check whether the subscription to the Analytics ID(s) requested by the UE should be maintained for other UE(s) and/or for itself. If it should be maintained, the SMF may decide to keep the subscription. Otherwise, the SMF may cancel the subscription of the Analytics ID(s) to the NWDAF.

The UE may also disable the exposure of analytics information to the UE during the PDU session release procedure. Enabled analytics information exposure to the UE may also be disabled by the SMF when the PDU session is released, even if the UE does not provide a disabling request to the SMF.

Based on the various descriptions of the first example of the disclosure, the following descriptions may apply to the UE, SMF, and/or UDM.

A new information element enables the UE to enable the exposure of analytics information to the UE via SM NAS messages.

The UE may support disabling the exposure of analytics information to the UE via SM NAS messages with a new information element.

The UE may obtain analytics information from the SMF via SM NAS messages (i.e., existing SM NAS messages or new SM NAS messages with new information elements).

The UE may support interactions between the NAS layer and the application layer.

The SMF may process activation requests and deactivation requests for the exposure of analytics information sent by the UE.

The SMF may provide analytics information to the UE via SM NAS messages (i.e., existing SM NAS messages or new SM NAS messages with new information elements).

The UDM may store Session Management subscription data related to the exposure of Analytics information to the UE.

### 3. A third example of the present disclosure

The third example of the present disclosure describes various examples of methods based on the behavior of the AMF. In accordance with the third example of the present disclosure, an example is described in which the AMF provides analytics data/information to the UE.

In a third example of the present disclosure, the AMF performs the actions performed by the SMF previously described in the first example of the present disclosure. For example, the UE may perform actions related to an enable/disable request to the AMF and analytics information exposure to the UE.

In the third example of the present disclosure, it may be understood that MM-related procedures (e.g., Registration procedure, Service Request procedure, newly defined MM procedure) are performed instead of the SM-related procedures previously described in the first example of the present disclosure. In the third example of the present disclosure, the SM NAS messages previously described in the first example of the present disclosure may be changed to MM NAS messages (e.g., a registration request, a service request, a newly defined MM NAS message).

In the third example of the present disclosure, the SM subscription data and subscription information that the SMF obtains from the UDM as previously described in the first example of the present disclosure may be changed to MM subscription data and subscription information that the AMF obtains from the UDM.

In the AMF-based solution according to the first example of the present disclosure, analytics information exposure that is enabled may be disabled when the PDU Session is released when the UE is deregistered, and in the AMF-based solution according to the third example of the present disclosure, analytics information exposure that is enabled may be disabled.

The approach proposed in the present disclosure for providing analytics data/information from the AMF to the UE may also be utilized to provide/expose other network related data/information to the UE (e.g., congestion level from the AMF, etc.) other than analytics data/information obtained through the NWDAF.

In the present disclosure, a UE enabling analytics information exposure to the UE may be interpreted as causing the AMF to enable analytics information exposure to the UE. And a UE disabling analytics information exposure to the UE may be interpreted as causing the AMF to disable analytics information exposure to the UE.

### 4. The fourth example of the present disclosure

The fourth example of the present disclosure describes various examples of an arrangement based on the behavior of the PCF. In accordance with the fourth example of the present disclosure, an example is described in which the PCF provides analytics data/information to the UE.

In the fourth example of the present disclosure, the PCF performs the operations performed by the described SMF previously described in the first example of the present disclosure. For example, the UE may make an enable/disable request to the PCF and analytics information exposure to the UE. The PCF may be a UE policy PCF or an AM PCF, wherein the UE may perform an enable/disable request for analytics information exposure to UE to the PCF via the AMF, and the PCF may provide analytics data/information to the UE via the AMF.

In the fourth example of the present disclosure, the SM related procedures described in the first example of the present disclosure may be changed to various procedures (e.g., Registration procedure, Service Request procedure, UCU procedure, newly defined procedure) that may send and receive messages to and from the PCF. And, in the fourth example of the present disclosure, the SM NAS messages described in the first example of the present disclosure may be changed to MM NAS messages, which may include messages that the UE sends to and receives from the PCF.

Further, in the fourth example of the present disclosure, the SM subscription data and subscription information that the SMF obtains from the UDM as previously described in the first example of the present disclosure may be changed to subscription information that the PCF obtains from the UDR.

In the first example of the present disclosure, the analytics information exposure that is enabled may be disabled when the PDU session is released. On the other hand, in the PCF-based solution according to the fourth example of the present disclosure, the analytics information exposure that is enabled may be disabled when the UE is deregistered.

The method proposed in the present disclosure for PCFs to provide analytics data/information to UEs can also be utilized to provide/expose network related data/information to UEs other than analytics data/information obtained through NWDAF.

In the present disclosure, a UE enabling analytics information exposure to the UE may be interpreted as a PCF enabling analytics information exposure to the UE. And a UE disabling analytics information exposure to the UE may be interpreted as causing the PCF to disable analytics information exposure to the UE.

### 5. The fifth example of the present disclsoure

In the fifth example of the present disclosure, a new NF (e.g., Analytics Information Exposure Function (AIEF) or Network Analytics Information Exposure Function (NAIEF)) for providing analytics data/information to a UE is defined. For example, the newly defined NF (e.g., Analytics Information Exposure Function (AIEF) or Network Analytics Information Exposure Function (NAIEF)) may provide analytics data/information to the UE.

The newly defined NF may transmit and receive messages to and from the UE via AMF, similar to a UE policy PCF.

In the fifth example of the present disclosure, the newly defined NF performs the actions performed by the SMF previously described in the first example of the disclosure. In response, the UE performs an enable/disable request to the newly defined NF and analytics information exposure to the UE. The UE performs an enable/disable request for analytics information exposure to UE with the newly defined NF via the AMF, and the newly defined NF may provide analytics data/information to the UE via the AMF.

In the fifth example of the present disclosure, the SM related procedures described in the first example of the present disclosure may be changed to various procedures (e.g., registration procedure, service request procedure, UCU procedure, newly defined procedure) that may send and receive messages to and from the newly defined NF. In the fifth example of the present disclosure, the SM NAS messages previously described in the first example of the present disclosure may be changed to MM NAS messages, which may include messages that the UE sends to and receives from the newly defined NF.

Further, in the fifth example of the present disclosure, the SM subscription data and subscription information that the SMF obtains from the UDM as previously described in the first example of the disclosure may be changed to subscription information that the newly defined NF obtains from the UDM or UDR.

In the fifth example of the present disclosure, the analytics information exposure that is enabled when the PDU Session previously described in the first example of the present disclosure is released may be disabled, whereas in the newly defined NF-based solution, the analytics information exposure that is enabled when the UE is deregistered may be disabled.

The approach proposed in the present disclosure for a newly defined NF to provide analytics data/information to UEs can also be utilized to provide/expose network related data/information to UEs other than analytics data/information obtained through NWDAF.

In the present disclosure, enabling analytics information exposure to UE may be interpreted as enabling analytics information exposure to UE by the newly defined NF, and disabling analytics information exposure to UE by UE may be interpreted as disabling analytics information exposure to UE by the newly defined NF.

### 6. The sixth example of the present disclosure

The sixth example of the present disclosure includes examples of various operations described in the first example through the fifth example of the present disclosure.

The operations described in the sixth example of the disclosure are illustrative only, and the UE, AMF, SMF, NWDAF, AI/ML AS, PCF, and New AF may perform any of the operations described in the first example through the fifth example of the present disclosure.

The following drawings are intended to illustrate specific embodiments of the present disclosure. The designations of specific devices or the designations of specific signals/messages/fields shown in the drawings are for illustrative purposes only, and the technical features of this specification are not limited to the specific designations used in the drawings below.

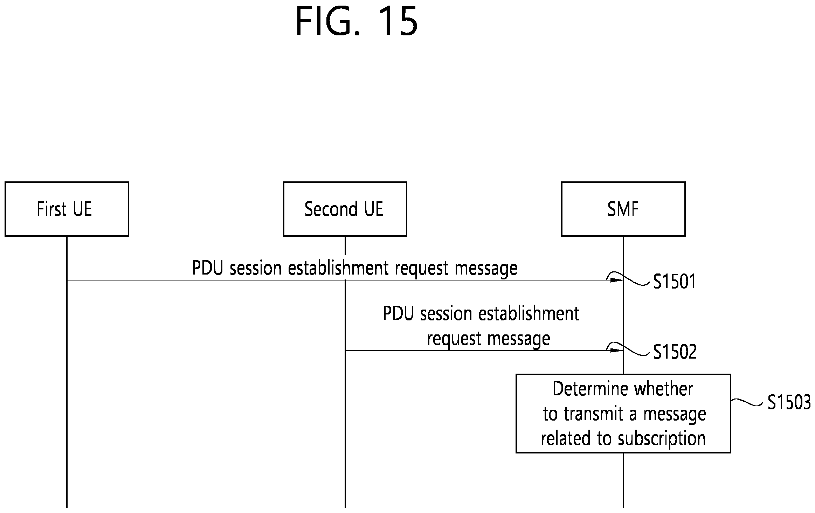

FIG. 15 illustrates a signal flow diagram according to a sixth example of the present disclosure.

In the example of FIG. 15, a first UE, a second UE, and an SMF are shown.

Note that while the example in FIG. 15 shows a PDU session establishment request message, this is for illustrative purposes only, and a PDU session modification request message may be used instead of a PDU session establishment request message.

In step S1501, the first UE may transmit a PDU session establishment request message to the SMF. The PDU session establishment request message may include an activation request information for exposing analytics information.

In step S1502, the second UE may transmit a PDU session establishment request message to the SMF. The PDU session establishment request message may include an activation request information for exposing analytics information.

In step S1503, the SMF may determine whether to send a message related to subscription. For example, the SMF may receive requests from multiple UEs to enable analytics information. The SMF may not request the NWDAF to subscribe to the Analytics ID for each of the multiple UEs for each request. For example, the SMF may decide that if the Analytics ID requested by the first UE is the same as the Analytics ID requested by the second UE, the SMF may decide not to send additional subscription request messages to the NWDAF for the second UE.

For example, as described in the present disclosure, the UE may transmit a request to the SMF for authorization to expose analytics information to the UE during the PDU session establishment procedure and the PDU session modification procedure. For example, the SMF may consider the SM subscription data received from the UDM to determine whether the UE is authorized to enable the exposure of analytics information to the UE. For example, the SMF may check if the NWDAF has already registered (or subscribed) to the Analytics ID associated with the exposure of analytics information with the same input parameters. If already registered, the SMF does not need to re-subscribe for the Analytics ID. Otherwise, the SMF may subscribe to the Analytics ID for the UE. For example, the SMF can provide the UE with analytics information obtained from the NWDAF. For example, the UE may send a request to disable the exposure of analytics information to the SMF during the PDU Session Modification process. For example, the SMF may stop providing analytics information to the UE. For example, the SMF may check if the subscription to the Analytics ID associated with the exposure of analytics information should be maintained for other UE(s). If not, the SMF can cancel the subscription to the Analytics ID.

The present disclosure can have a variety of effects.

For example, as described in the present disclosure, a network may provide network analytics data/information to a UE so that the UE can utilize it to operate AI/ML services. For example, if multiple UEs have requested analytics information based on the same Analytics ID and/or the same input parameters, the network may efficiently provide analytics information based on the same Analytics ID when providing network analytics data/information to the UEs.

The effects that may be obtained from the specific examples of the present disclosure are not limited to those listed above. For example, there may be a variety of technical effects that a person having ordinary skill in the related art may understand or infer from the present disclosure. Accordingly, the specific effects of the present disclosure are not limited to those expressly set forth herein, but may include a variety of effects that may be understood or inferred from the technical features of the present disclosure.

For reference, the operation of the terminal (e.g., UE) described in the present specification may be implemented by the apparatus of FIGS. 1 to 4 described above. For example, the terminal (e.g., UE) may be the first device 100 or the second device 200 of FIG. 2. For example, an operation of a terminal (e.g., UE) described herein may be processed by one or more processors 102 or 202 . The operation of the terminal described herein may be stored in one or more memories 104 or 204 in the form of an instruction/program (e.g., instruction, executable code) executable by one or more processors 102 or 202 . One or more processors 102 or 202 control one or more memories 104 or 204 and one or more transceivers 105 or 206, and may perform the operation of the terminal (e.g., UE) described herein by executing instructions/programs stored in one or more memories 104 or 204.

In addition, instructions for performing an operation of a terminal (e.g., UE) described in the present disclosure of the present specification may be stored in a non-volatile computer-readable storage medium in which it is recorded. The storage medium may be included in one or more memories 104 or 204 . And, the instructions recorded in the storage medium may be executed by one or more processors 102 or 202 to perform the operation of the terminal (e.g., UE) described in the present disclosure of the present specification.

For reference, the operation of a network node (e.g., AMF, SMF, UPF, PCF, AI/ML AS, new NF etc.) or base station (e.g., NG-RAN, gNB, etc.) described herein may be implemented by the apparatus of FIGS. 1 to 3 to be described below. For example, a network node or a base station may be the first device 100 of FIG.2 or the second device 200 of FIG.2. For example, the operation of a network node or base station described herein may be processed by one or more processors 102 or 202. The operation of the terminal described herein may be stored in one or more memories 104 or 204 in the form of an instruction/program (e.g., instruction, executable code) executable by one or more processors 102 or 202. One or more processors 102 or 202 may perform the operation of a network node or a base station described herein, by controlling one or more memories 104 or 204 and one or more transceivers 106 or 206 and executing instructions/programs stored in one or more memories 104 or 204.

In addition, instructions for performing the operation of the network node or base station described in the present disclosure of the present specification may be stored in a non-volatile (or non-transitory) computer-readable storage medium. The storage medium may be included in one or more memories 104 or 204. And, the instructions recorded in the storage medium are executed by one or more processors 102 or 202, so that the operations of a network node or base station are performed.

In the above, preferred embodiments have been exemplarily described, but the present disclosure of the present specification is not limited to such specific embodiments, and thus, modifications, changes, or may be improved.

In the exemplary system described above, the methods are described on the basis of a flowchart as a series of steps or blocks, but are not limited to the order of the steps described, some steps may occur in a different order or concurrent with other steps as described above. In addition, those skilled in the art will understand that the steps shown in the flowchart are not exclusive and that other steps may be included or that one or more steps of the flowchart may be deleted without affecting the scope of rights.

The claims described herein may be combined in various ways. For example, the technical features of the method claims of the present specification may be combined and implemented as an apparatus, and the technical features of the apparatus claims of the present specification may be combined and implemented as a method. In addition, the technical features of the method claim of the present specification and the technical features of the apparatus claim may be combined to be implemented as an apparatus, and the technical features of the method claim of the present specification and the technical features of the apparatus claim may be combined and implemented as a method.

## Claims

1. A method for performing communication related to analytics information, the method performed by a Session Management Function (SMF), comprising:
receiving a first PDU session establishment request message from a first User Equipment (UE),
wherein the first PDU session establishment request message includes activation request information of an analytics information exposure, a first analytics ID, and a first input parameter;
transmitting a first subscription request message related to analytics information based on the first analytics ID to the NWDAF;
receiving a second PDU session establishment request message from a second UE,
wherein the second PDU session establishment request message includes activation request information of the analytics information exposure, a second analytics ID, and a second input parameter; and
determining whether to transmit a second subscription request message related to analytics information based on the second analytics ID to the NWDAF.

2. The method of claim 1,
wherein the determining is performed based on whether the second analytics ID and the first analytics ID are the same and/or whether the first input parameter and the second input parameter are the same.

3. The method of claim 2,
based on that the second analytics ID and the first analytics ID are the same, and the first input parameter and the second input parameter are the same, wherein the second subscription request message is determined to not to be transmitted.

4. The method of claim 1, further comprising:
receiving analytics information based on the first analytics ID from the NWDAF; and
transmitting the analytics information to the second UE, based on that the second subscription request message is determined to not to be transmitted.

5. The method of claim 2,
based on that the second analytics ID and the first analytics ID are the same, and the first input parameter and the second input parameter are different, wherein the second subscription request message is determined to be transmitted, and
wherein the second subscription request includes information for further subscribing the second UE to analytics information based on the first analytics ID.

6. The method of claim 1, further comprising:
receiving a message including information requesting disabling exposure of the analytics information, from the first UE or the second UE.

7. The method of claim 6, further comprising:
determining whether a subscription to the analytics ID related to the disabling of the exposure of the analytics information should be maintained for other UE.

8. A Session Management Function (SMF) for performing communication related to analytics information, comprising:
at least one transceiver;
at least one processor; and
at least one computer memory operably connectable to the at least one processor and storing instructions that, based on being executed by the at least one processor, perform operations comprising:
receiving a first PDU session establishment request message from a first User Equipment (UE),
wherein the first PDU session establishment request message includes activation request information of an analytics information exposure, a first analytics ID, and a first input parameter;
transmitting a first subscription request message related to analytics information based on the first analytics ID to the NWDAF;
receiving a second PDU session establishment request message from a second UE,
wherein the second PDU session establishment request message includes activation request information of the analytics information exposure, a second analytics ID, and a second input parameter; and
determining whether to transmit a second subscription request message related to analytics information based on the second analytics ID to the NWDAF.

9. A method for performing a communication related to analytics information, the method performed by a user equipment (UE) and comprising:
determining whether it is necessary to obtain analytics information from a 5G core (5GC);
transmitting a PDU session establishment request message to a session management function (SMF),
wherein the PDU session establishment request message includes request information for activation of analytics information exposure, an analytics ID, and input parameters; and
receiving a PDU session establishment acceptance message from the SMF; and
receiving analytics information based on the analytics ID from the SMF.

10. The method of claim 9,
based on a service or an operation based on Artificial Intelligence (AI)/Machine Learning (ML),
wherein it is determined that it is necessary to obtain the analytical information.

11. The method of claim 9, further comprising:
transmitting a message comprising information requesting disabling of the analytics information exposure to the SMF.

12. A User Equipment (UE) for performing communication related to analytics information, comprising:
at least one transceiver;
at least one processor; and
at least one computer memory operably connectable to the at least one processor and storing instructions that, based on being executed by the at least one processor, perform operations comprising:
determining whether it is necessary to obtain analytics information from a 5G core (5GC);
transmitting a PDU session establishment request message to a session management function (SMF),
wherein the PDU session establishment request message includes request information for activation of analytics information exposure, an analytics ID, and input parameters; and
receiving a PDU session establishment acceptance message from the SMF; and
receiving analytics information based on the analytics ID from the SMF.

13. The UE of claim 12,
wherein the UE is an autonomous driving device performing communication with at least one of a mobile terminal, a network, and an autonomous vehicle other than the UE.

14. An apparatus in mobile communications, comprising:
at least one processor; and
at least one computer memory operably connectable to the at least one processor and storing instructions that, based on being executed by the at least one processor, perform operations comprising:
determining whether it is necessary to obtain analytics information from a 5G core (5GC);
generating a PDU session establishment request message to be transmitted to a session management function (SMF),
wherein the PDU session establishment request message includes request information for activation of analytics information exposure, an analytics ID, and input parameters; and
obtaining a PDU session establishment acceptance message; and
obtaining analytics information based on the analytics ID.

15. A non-transitory Computer Readable Medium (CRM) storing instructions that, based on being executed by at least one processor, perform operations comprising:
determining whether it is necessary to obtain analytics information from a 5G core (5GC);
generating a PDU session establishment request message to be transmitted to a session management function (SMF),
wherein the PDU session establishment request message includes request information for activation of analytics information exposure, an analytics ID, and input parameters; and
obtaining a PDU session establishment acceptance message; and
obtaining analytics information based on the analytics ID.
